# EUROPEAN PATENT SPECIFICATION

(11) **EP 3 933 488 B1**
(45) Date of publication and mention of the grant of the patent: **12.08.2026**
(21) Application number: 21155945.5
(22) Date of filing: 09.02.2021
(51) Int. Cl.: G02B 27/00, G02B 27/01

(54) **SYSTEM FOR VEHICLE OR MACHINE**
SYSTEM FÜR EIN FAHRZEUG ODER EINE MASCHINE
SYSTÈME DE VÉHICULE OU MACHINE

(30) Priority: 30.06.2020 EP 20183155
(43) Date of publication of application: 05.01.2022
(73) Proprietor: Optea AB, 17279 Sundbyberg (SE)
(72) Inventor: Arboix, Esteban, 17279 Sundbyberg (SE); Alasaarela, Ilkka, 17279 Sundbyberg (SE)
(74) Representative: Kolster Oy Ab

(56) References cited:
- WO-A1-2016/014712
- US-A- 6 072 444
- US-A1- 2010 046 075
- US-A1- 2015 362 731
- US-A1- 2016 062 117
- US-A1- 2017 092 169
- US-A1- 2018 136 460
- US-B1- 6 343 863

## Description

### FIELD OF THE INVENTION

The invention relates to a system for a vehicle or machine, and particularly to a system comprising a head up display (HUD).

### BACKGROUND OF THE INVENTION

Head up displays (HUDs) have amongst other been used in fighter jets and passenger cars, where they have proven advantages in human-machine interaction. In recent years, HUDs are being introduced in off-highway vehicles (OHVs), such as forest harvesters and work machines. As the number of HUDs increases, installing them in different OVHs may be challenging. Patent document US 6343863 presents an aircraft display mounting system.

### BRIEF DESCRIPTION OF THE INVENTION

Various aspects of examples of the invention are set out in the claims.

The invention is defined by the independent claims. Embodiments are defined in the dependent claims.

### BRIEF DESCRIPTION OF THE DRAWINGS

For a more complete understanding of example embodiments of the present invention, reference is now made to the following descriptions taken in connection with the accompanying drawings in which:
Figure 1a shows an exemplifying vehicle in which examples of disclosed embodiments may be applied;
Figure 1b shows an exemplifying vehicle in which examples of disclosed embodiments may be applied;
Figure 2a shows an exemplifying cabin in which examples of disclosed embodiments may be applied;
Figure 2b shows an exemplifying vehicle in which examples of disclosed embodiments may be applied;
Figure 2c shows an exemplifying cabin in which examples of disclosed embodiments may be applied;
Figure 2d shows an exemplifying cabin in which examples of disclosed embodiments may be applied;
Figure 2e shows an exemplifying cabin in which examples of disclosed embodiments may be applied;
Figure 3 illustrates an exemplifying system in which examples of disclosed embodiments may be applied;
Figure 4 illustrates an example of a HUD apparatus in which examples of disclosed embodiments may be applied;
Figure 5a illustrates an example of a HUD system seen from the side in which examples of disclosed embodiments may be applied;
Figure 5b illustrates an example of a HUD system seen from above in which examples of disclosed embodiments may be applied;
Figure 6a illustrates an example of an attachment arrangement in which examples of disclosed embodiments may be applied;
Figure 6b illustrates an example of a section of an attachment arrangement in which some examples of disclosed embodiments may be applied;
Figure 7a illustrates a cut out of an example of a central base in which examples of disclosed embodiments may be applied;
Figure 7b illustrates a cut out of an example of a central base seen from above in which examples of disclosed embodiments may be applied;
Figure 8a illustrates an example of support means in which examples of disclosed embodiments may be applied;
Figure 8b illustrates an example of support means in which examples of disclosed embodiments may be applied;
Figure 9a illustrates an example of an interface part in which examples of disclosed embodiments may be applied;
Figure 9b illustrates an example of an interface part in which examples of disclosed embodiments may be applied;
Figure 10 shows a block diagram of an example overall architecture in which examples of disclosed embodiments may be applied;
Figure 11 illustrates an example method according to an example embodiment of the invention;
Figure 12a illustrates an example of a holding means in which examples of disclosed embodiments may be applied;
Figure 12b illustrates an example of a holding means in which examples of disclosed embodiments may be applied;
Figure 13 illustrates an example of a holding means in which examples of disclosed embodiments may be applied; and
Figure 14 illustrates an example of a movement of the virtual image in which examples of disclosed embodiments may be applied.

### DETAILED DESCRIPTION OF THE INVENTION

Although the specification may refer to a fixed cabin, this mean that the cabin may be fixed for rotation or movement in relation to the vehicle or machine it is on. Thus, it may not be fixed to the earth but it may be in on a moving or movable vehicle. Also the HUD may be fixed in rotation, it means that the fixing in rotation may be relative to the cabin, not to the exterior world.

It should be noted that while Figures illustrate various embodiments, they are simplified diagrams that only show some structures and/or functional entities. The connections shown in the Figures may refer to logical or physical connections. It is apparent to a person skilled in the art that the described arrangement may also comprise other functions and structures than those described in Figures and text. It should be appreciated that details of some functions, structures, and the signalling used for operation and/or control are irrelevant to the actual invention. Therefore, they need not be discussed in more detail here.

The invention is defined in the appended claims. Any features in the following description that are not claimed are not part of the invention but they are considered useful for understanding the invention. Similarly all the features which are claimed in the appended claims, should be regarded as part of the invention even if they appear in the following description as optional by using wording such as "preferably", "may" or "optionally". Embodiments relate to a system for a vehicle or machine comprising a head up display (HUD) system. Wherein the vehicle or machine comprising a cabin. More specifically, example embodiments relate to the HUD system comprising a head up display (HUD) apparatus configured to project a virtual image within an eyebox to be seen by an observer, attachment arrangement configured to be attached to the cabin or fastening means, and attachment means to which the HUD apparatus is configured to be attached to, and wherein the attachment means comprising second locking means configured to attach the HUD system to the attachment arrangement.

A position and/or orientation of the virtual image and/or eyebox is configured to be adjusted and/or rotated and the virtual image is configured to be redirected, reorientated, skewed, and/or manipulated through a combiner.

The present arrangement is advantageous for instance in respect to vehicles and machines, for example, off-highway vehicles (OHVs), OHV work machines, on-highway vehicles, working units, working machines, goods handling machines, goods handling machines, earth moving machines, agricultural machines, forest harvesters, forwarders, tractors, trains, cranes, trams, or any combinations of these.

Currently the number of HUDs in vehicles and machines may increase because they may provide benefits such as an improved work efficiency, better ergonomics, a faster user response, improved decision-making, and a faster learning, for example. The HUDs may be retrofitted to the vehicle._{H} HUDs may also be integrated at the manufacturing stage. For example, the windshield geometry may be optimised for HUD in the design phase. In any case, the HUD solutions for the vehicles and machines that do not have integrated HUD in manufacturing stage may need a system that is retrofittable, easy and quick to install and also flexible to fit in the different types of cabins of the vehicles or machines. Preferably, the system may be installed without breaking surfaces of the cabin during installation. The system may be lightweight and adaptive to facilitate installation. In addition, flexibility may be needed for turning and providing six-degree movement of a virtual image, this is called calibration. To allow the HUD to turn and adjust according to the undesired movements of the user's head, and/or HUD System, and/or HUD System components, for example combiner, is called virtual image stabilisation, and it may be done macroscopically by physically turning the HUD and its components like fold mirror etc. or microscopically to compensate or calibrate for example against machine vibrations by software. Further, the virtual image may need to be able to move with an operator's eyesight or boresight, and the virtual image sometimes needs to correspond to the real-world position. In an example embodiment, the virtual image needs to overlap the real-world scenery to provide a composite view, this is called augmented reality. Augmented reality is a technology that superimposes a computer-generated image on a user's view of the real word, thus providing a composite view. Augmented reality is an interactive experience comprising many different technologies. In some other cases, like when displaying only text information, for example speed or something like that, then the virtual image may not need to be superposed 1:1 to the real-world scenery.

There is a large aftermarket present for HUDs because the variety of OHVs is large, their cabins may look fundamentally different, and the lifetime of each OHV is long compared with for example an automobile. Installing a standardized HUD in any OHV may be challenging, and may require a versatile system. Furthermore, it may be challenging to add functionalities like virtual image repositioning, i.e. calibration, and image stabilisation in a such a challenging installation-environment. Installation may depend on the possibility to design a versatile and multipurpose system that easily integrates to any cabin and may allow for the functions of the system.

What is next explained presents a technical solution for an improved system for a vehicle or machine, in order, to alleviate the problems mentioned above.

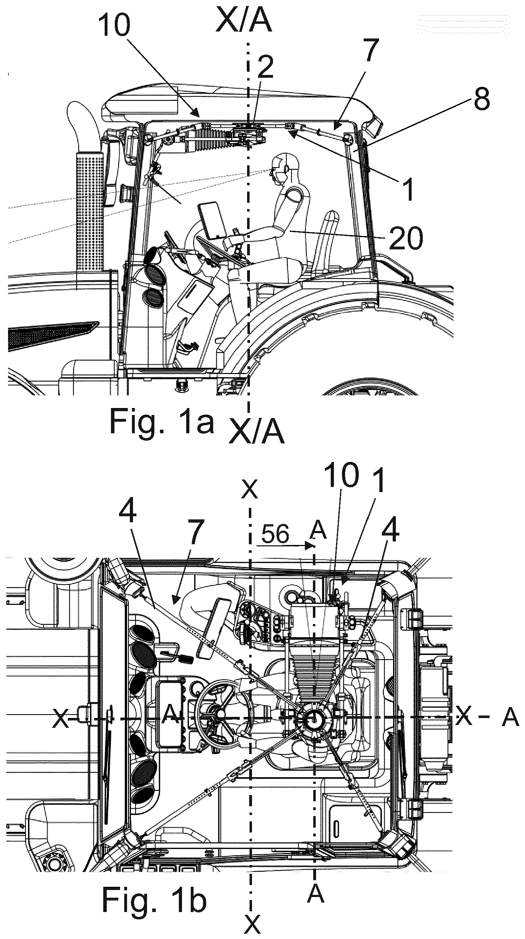

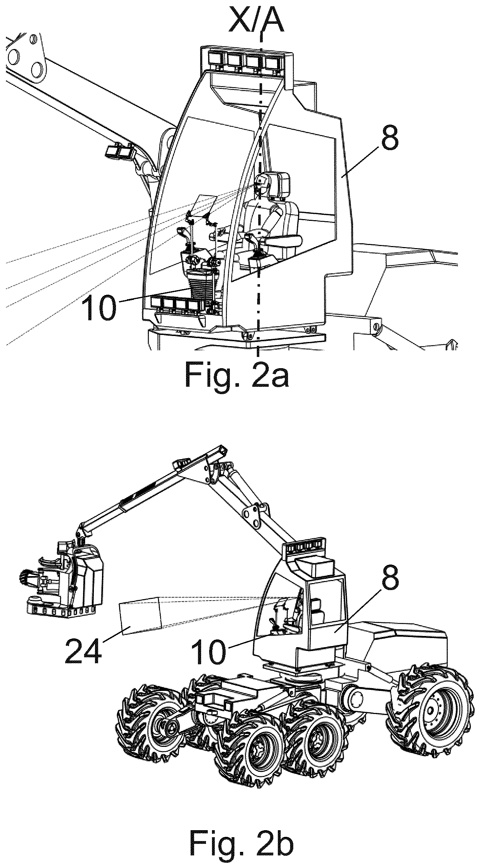

The example of Figure 1a shows a side view of a system 1 for of a vehicle. Figure 1b shows an example of a system 1 for a HUD system 10 in a vehicle seen from above. In Figure 1b and 1b, the vehicle is a tractor but could also be another vehicle or working machine, like a harvester. Figures 1a and 1b show an A-axis, which is a rotation center of the HUD system 10 or HUD apparatus 32, and an X-axis that is a cabin 8 vertical central axis. Sometimes the X-axis may be the same as the A-axis as can be seen from the Figure 1a. When the cabin 8 is a rotational cabin, the X-axis may also be the same as rotation axis of the HUD apparatus 32 as can be seen from Figures 2a and 2b. Sometimes X-axis may not be the central axis of the cabin 8, for example, when the cabin 8 rotates off-center. In Figure 1a the A-axis of the HUD system 10 and the X-axis of the cabin 8 are the same. In Figure 1b the observer 20 has turned his head and at least some of the support arms 4 of the support means 7 have been moved to another location and the HUD system 10 has been turned to the right. At the same time the A-axis of the HUD system 10 has moved to the back according to a movement arrow 56. This means that in Figure 1b the A-axis 10 and the X-axis are not any more in the same position. This kind of A-axis translation may be needed in this case because the seat of the driver, implicitly the position of the operator center (Oc) and/or the eyebox 22 is fixed. According to another embodiment, the seat and Oc may have been moved when the driver was turning his head, in such a way that A-axis translation may be unnecessary.

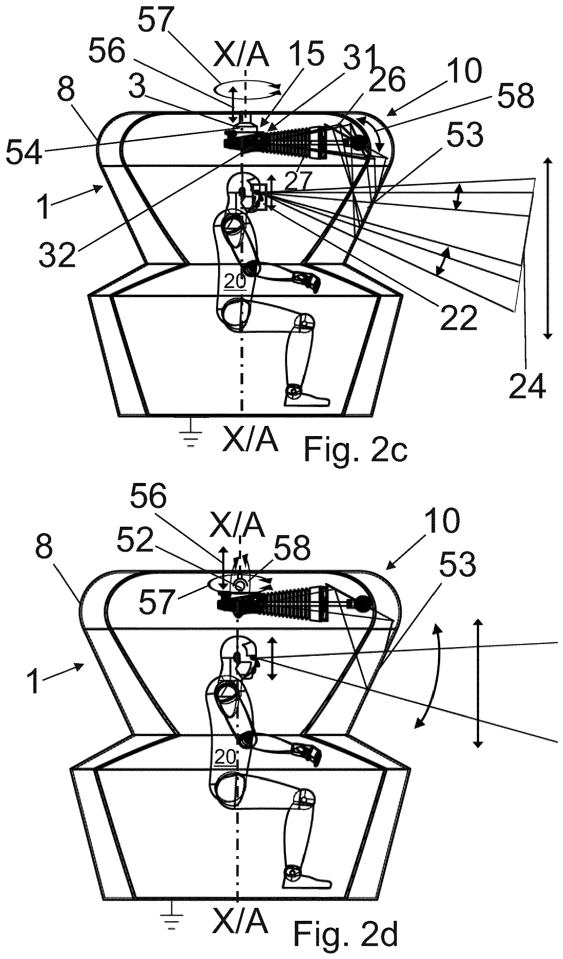

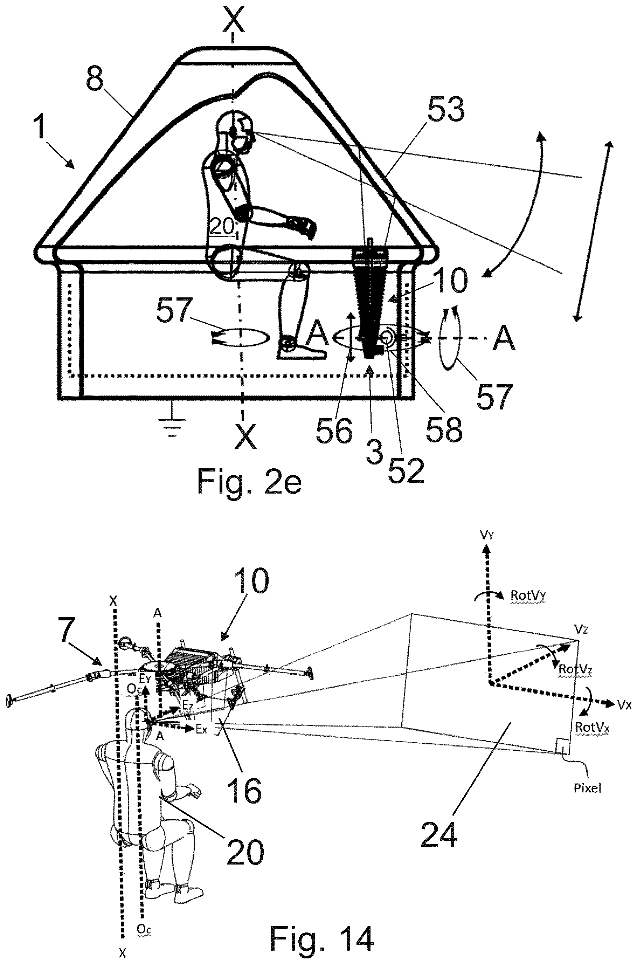

The examples of Figures 2c, 2d, and 2e show that the cabin 8 is designed to be rotationally symmetric. The system 1 may allow a virtual image 24 to be moved 0° - 360° around, as well as up and down to provide a full or semi full FOV (Field of View) around the whole vehicle or machine.

Figure 1a shows that an observer 20, like a driver or an operator, is looking forward and seeing a virtual image 24 through the separate combiner 16 and the window. The system 1 may comprise a HUD system 10, which may be directed also ahead in the direction of the observer's line of sight.

In Figure 1b, the observer 20 is looking sideways to the right 90° and seeing a virtual image 24 through the separate combiner 16 and the right window. The separate combiner 16 may also be called a beamsplitter. The optical axes G1-G4 of the HUD system 10 and the virtual image 24 may also be directed to the right in the direction of the observer's 20 line of sight. As can be seen from the Figure 1b the HUD system 10 has been moved in relation to X-axis when comparing to Figure 1a, because the HUD system 10 has been turned to the right and the support arms 4 has been adjusted.

An example of Figures 2a, and 2b show a harvester comprising a HUD system 10 fixed or semi-fixed to the cabin 8 of the harvester. Fixed in the sense of that the HUD system may not rotate the cabin 8 and semi-fixed in that sense that there may still be movement built in, for example, on the optical axis rods 27, fold mirror 26, or other parts. The example of Figure 2c shows a side view of a cabin 8 of a vehicle or machine. The examples of Figures 2d and 2e show a side view of another cabin 8 of a vehicle or machine. The attachment arrangement 3 may be attached direct to the cabin 8 of the vehicle or machine. The attachment arrangement 3 may be attached direct to the ceiling of the cabin 8 according to the figures 2c and 2d or to the bottom of the cabin 8 according to the Figure 2e. Support arms 4 may not be needed because the cabin 8 is rotationally symmetric, and X-axis may be equal to A-axis or Oc-axis, and the cabin 8 may have a windshield-combiner 53. When the system 1 and/or the seat is turned, the driver will always have his head in the right position compared to the A-axis.

According to an example embodiment, the system 1 a vehicle or machine comprising a HUD system 10. The HUD system 10 comprising a HUD apparatus 32 configured to project a virtual image 24 within an eyebox 22 to be seen by an observer 20, an attachment arrangement 3 configured to be attached to the cabin 8 or fastening means, and attachment means 31 to which the HUD apparatus 32 is configured to be attached to, and wherein the attachment means 31 comprising second locking means 15 configured to attach the HUD system 10 to the attachment arrangement 3. The attachment arrangement 3 may be configured to be removable attached to the cabin 8 or the fastening means. According to an example embodiment, the fastening means are support means as shown in Figure 1a and 1b.

The attachment arrangement 3 of example Figure 2c comprises a first locking means 13. The second locking means 15 may be configured to lock the HUD system 10 to the first locking means 13 of the attachment arrangement 3. The example of Figure 2c shows that the second locking means comprise a sliding disk 54. As seen from the Figure 2c the attachment arrangement 3 may be configured to move the HUD system 10 up and down according to a movement arrow 56 and/or around the A-axis according to a rotation arrow 57. The vertical up and down movement of the virtual image 24 may be done by tilting the fold mirror 26 according to the tilting arrow 58.

The attachment means 31 comprise second locking means 15 and one or more optical axis rods 27. The attachment means 31 may also comprise at least one mounting rod 28. Second locking means may comprise a support plate 38, ball joint 52, sliding disk 54, two-way connector, clamp and/or an arm extension or retraction lock 42.

The attachment arrangement 3 of example Figure 2d comprises a first locking means 13. The second locking means 15 may be configured to lock the HUD system 10 to the first locking means 13 of the attachment arrangement 3. The example of Figure 2d shows that the second locking means comprises a ball joint 52. As seen from the example of Figure 2d the attachment arrangement 3 may be configured to move the HUD system 10 up and down according to a movement arrow 56, around the A-axis according to a rotation arrow 57, and/or to tilt the HUD system 10 according to a tilting arrow 58.

The attachment arrangement 3 of example Figure 2e comprises a first locking means 13. The second locking means 15 may be configured to lock the HUD system 10 to the first locking means 13 of the attachment arrangement 3. The example of Figure 2e shows that the second locking means 15 comprises a ball joint 52. As seen from the Figure 2e the attachment arrangement 3 may be configured to move the HUD system 10 up and down according to a movement arrow 56, around the A-axis according to a rotation arrow 57, and/or to tilt the HUD system 10 according to a tilting arrow 58. The observer 20 may rotate around the X-axis according to the rotation arrow 57.

A position and/or orientation of the virtual image 24 and/or eyebox 22 is configured to be adjusted and/or rotated and the virtual image 24 is configured to be redirected, reorientated, skewed, and/or in other ways manipulated through a combiner. The system 1 and/or the operator 20 may be configured to adjust and/or rotate a position and/or orientation of the virtual image 24 and/or eyebox 22 and to redirect, reorientate, skew, and/or in other ways manipulate the virtual image 24 through a combiner. The example of Figures 2c and 2d and 2e shows that the combiner is a windshield-combiner 53. The windshield-combiner 53 may be integrated to or with a planar or non-planar windshield of a vehicle or machine. According to the example embodiment the windshield-combiner 53 may be atleast partially rotationally symmetric. The windshield-combiner 53 may be partially rotationally symmetric in respect to the A-axis. The windshield-combiner 53 may also be used in a cabin similar to Figures 1a, 1b, 2a and 2b.

According to an example embodiment, at least one combiner is a wind-shield-combiner 53 or a separate combiner 16. Thus, the windshield may act as a combiner of the HUD system 10. The system 1 may have one or more combiners, for example, one combiner may be a wind-shield combiner 53 and in addition to that there may be one or more separate combiners 16. The system 1 may also have one or more separate combiners 16.

The HUD system 10 further comprising at least one combiner and/or at least one fold mirror 26, and wherein the system 1 is configured to adjust a vertical position of the virtual image 24 and/or eyebox 22 by tilting at least one of the following: the HUD apparatus 32, the combiner, an intermediate image 12, and/or the fold mirror 26. An example of Figure 2d show that adjustment of the vertical position of the virtual image 24 and/or eyebox 22 is done by tilting the HUD apparatus 32 by using the ball joint 52 and moving the HUD apparatus up and down according to moving arrow 56. Figure 2c shows that the adjustment of the vertical position of the virtual image 24 and/or eyebox 22 may be done by tilting the fold mirror 26 according to the tilting arrow 58. The attachment means 31 further comprising at least one optical axis rod 27 for attaching the fold mirror 26 to the HUD system 10.

The system 1 is configured to adjust a horizontal position of the virtual image 24 and/or eyebox 22 by rotating the HUD apparatus 32 around an A-axis or around an X-axis of the HUD system 10 of the cabin 8, and/or by adjusting at least one of the following: orientation of the fold mirror 26 in respect to the HUD apparatus 32, and/or orientation of the combiner in respect to the HUD apparatus 32. The attachment arrangement 3 may comprise means to rotate the HUD system. In an example of Figure 2d the attachment arrangement 3 comprises a ball joint 52. Sometimes A-axis may be the same as X-axis and then the HUD system 10 is rotating around the A-axis and the X-axis as shown in Figures 2c and 2d and 2e where the cabin 8 is fixed.

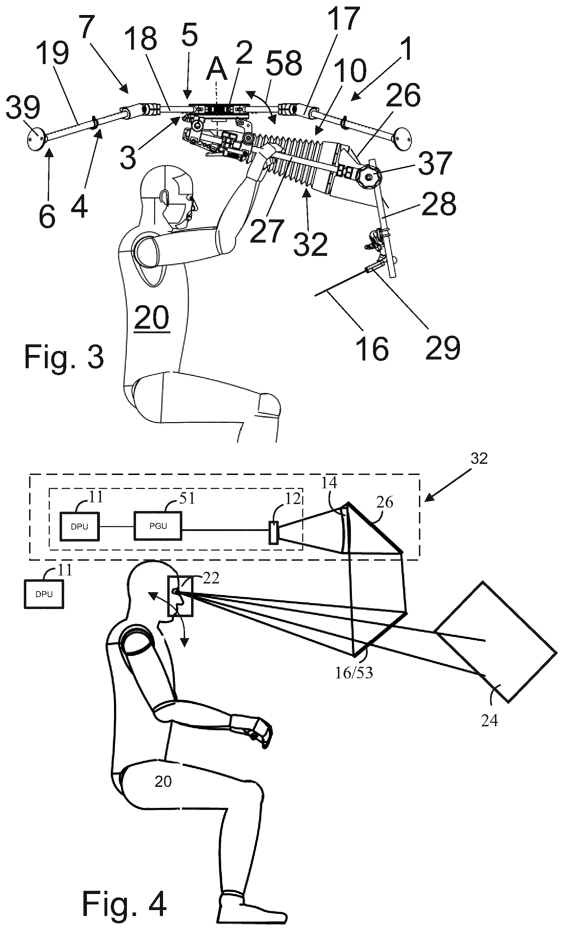

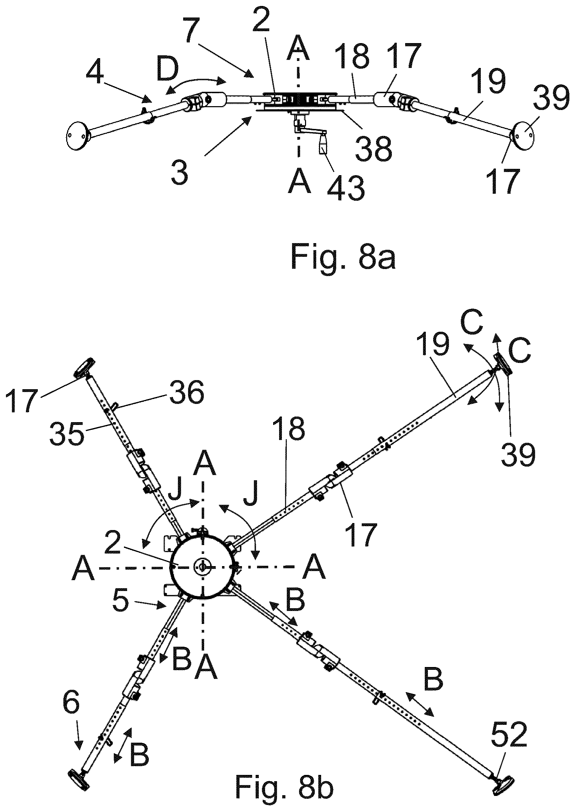

Figure 3 is depicting a system 1 operating in accordance with an example embodiment of the invention. The observer 20 may tilt the HUD system 10 up and down or rotate around the A-axis and/or translate A-axis by hands. Translation or moving of the HUD system 10 moves also the A-axis as can be seen in Figures 1a and 1b. The system 1 comprises a support means 7. Figure 8a shows a side view of an exemplifying support means 7 comprising attachment arrangement 3. Figure 8b shows support means 7 seen from above.

The support means 7 of Figures 3, 8a, and 8b may be used in the vehicle of Figures 1a and 1b. In the example of Figure 8b the support arms 4 has been amended so that two of the support arms 4 has been extended and two of the support arms has been retracted, thus moving the central base 2 and A-axis to the different place, i.e. to back, when comparing to the Figure 8a. In the example of Figures 3, 8a and 8b the support means 7 comprising a central base 2. According to an example embodiment the support means 7 comprise an attachment arrangement 3. According to an example embodiment the attachment arrangement 3 are attached to the bottom of the central base 2. The attachment arrangement 3 may be configured to carry the HUD system 10 and HUD apparatus 32. The HUD system 10 may be connected removably and/or rotatably to the support means 7. This connection may allow the HUD system 10 to rotate around the central A-axis of the central base 2 and allow the observer 20 to see the virtual image 24 also when he is turning his sight. When the HUD system 10 is in right place it may be locked in that place. The support means 7 may comprise several support arms 4 extending from the central base 2, wherein each support arm 4 comprising a first end 5 at the central base 2 and a second end 6 which may be a free end. The second ends of the support arms 4 may be configured to be pushed against pillars or other internal structures of the cabin 8 of the vehicle or machine, thereby enabling surface contacts between the support arms 4 and the cabin 8. The second ends of the support arms 4 may also be configured to be fixated by means like glue, screw, welding, magnetic, and/or suction, for example. One or more joints 17 and one or more first and second rods 18, 19 may be added and removed. This may depend on the cabin 8 wherein the system 1 may be installed in. Sometimes it may be beneficial to add some additional joints 17 and rods 18, 19 to achieve a closer-to-roof fitting of the system 1 or for other reasons.

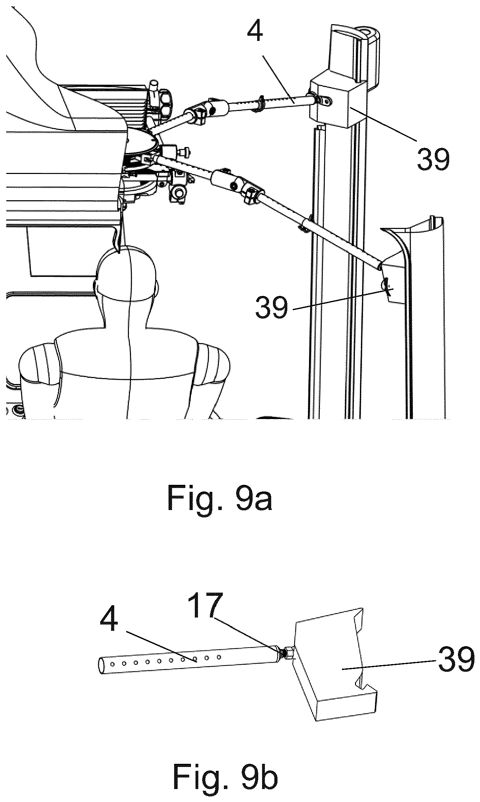

The example of Figure 8b shows four support arms 4 but it may be possible to have more than four support arms 4, or less. The second end 6 of at least one support arm 4 may comprise an interface part 39. The example of Figure 9a shows how the support arms 4 are attached against the pillar of the cabin 8 by the interface part 39 with non-destructive contact. The example of Figure 9b shows details of the interface part 39. The interface part may have the form of the pillar to increase the durability or improve the surface contact, i.e. fixation, of the attachment. The interface part 39 may be configured to be attached to the second end 6 by a joint 17, for example, ball joint. The interface part 39 may be made of plastic or rubber and/or it may have a suction cup, a lot of needle-points and/or ribbed structure to facilitate the grip to achieve better adhesion and fixation. The interface part 39 may also be shaped to match the shape of a mounting surface, such as a pillar.

According to an example embodiment, the surface contacts between the support arms 4 and the cabin 8 are destructive or non-destructive. In a destructive, surface-braking contact, the interface part 39 may have at least one hole to attach the support arm to the pillar of the cabin 8 with a screw, for example. In a non-destructive contact the interface part 39 may be placed against the support surface without additional surface braking fastening.

According to an example embodiment, at least one support arm 4 comprising a first and a second rod 18, 19, wherein the first and the second rod 18, 19 are connected to each other by a joint 17. The first and the second rod 18, 19 may be connected to each other also by a hinge, or swivel clamp connector joint, for example. The first rod 18 may comprise the first end 5 and the second rod 18 may comprise the second end 6. The first and the second rod 18, 19 may be pivotally and/or rotatably connected to each other. The joint 17 is a ball joint or hinge, for example.

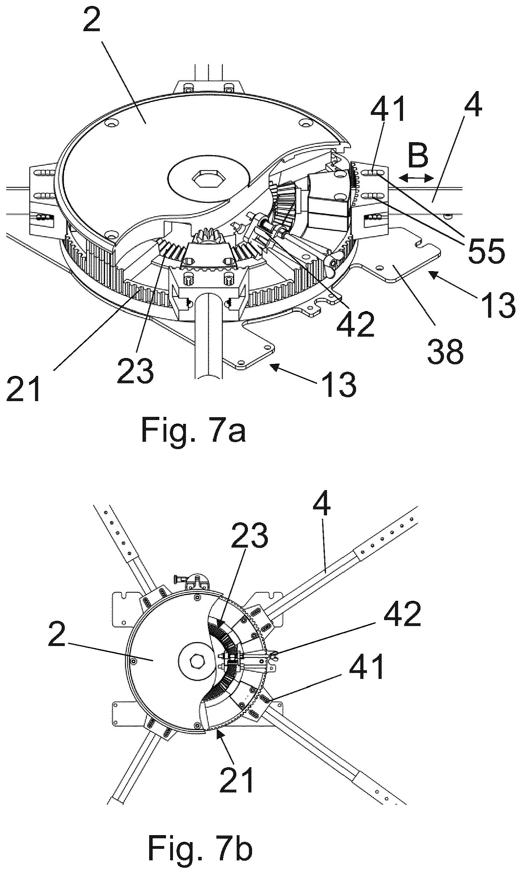

Figures 7a and 7b show an example of a central base 2. According to an example embodiment, the central base 2 comprising an arm and rotation lock 21, and a base gear 23. The arm and rotation lock 21 may be used to lock the angular movement of the support arms 4 and/or to lock the rotation of the HUD system 10 when turning it rotationally, for example, when the HUD system 10 is turned to the side of the vehicle as is done in Figures 1a and 1b. The base gear 23 may extend and shorten at least one support arm 4 through a ball screw according to the arrow B. The base gear 23 may be a bevel gear.

According to an example embodiment, the first and/or the second rod 18, 19 is a telescopic rod. The rods 18, 19 may be a tube-in-tube rods, that may allow for the extension of the support arms 4. The profile of the rods 18, 19 may be round, square, or triangular, for example. The length of the rods 18, 19 may be adjusted back and forth according to the arrows B to shorten or lengthen the rods 18,19. The rods 18, 19 may be configured to be adjusted manually or by means of an actuator 9. An example of Figures 7a and 7b show an arm extension or retraction lock 42. When the arm extension or retraction lock 42 is engaged, the at least one support arm 4 may not be extended or shortened, and when the arm extension or retraction lock 42 is disengaged length of the at least one support arm 4 may be adjusted. An example of Figure 8a shows that a handle 43 is used as to adjust the arms. The length of the rods 18, 19 may be adjusted by turning the handle 43. Inside of the first rod 18 may be a ball screw that may convert rotation of the base gear 23 to a translation of the first rod 18. All the rods 18,19 may be pushed in and out equally or individually by one rod 18,19 at a time. The rods 18,19 may also adjusted telescopically.

The example of Figure 8b shows holes 35 wherein the locking parts 36, like a locking pin, for example, may be attached to after the rods 19 have been adjusted to the correct length. According to an example embodiment, the first rod 18 is a telescopic or linear rod and the second rod 19 is a telescopic rod. The rods 18, 19 may also be configured to be adjusted by means of an actuator 9. According to an example embodiment the actuator 9 is a motor, handle, hydraulic or pneumatic cylinder, linear actuator, piezo, magnet, piston, translation stage, compressed air, screw, and/or any mechanical element that provides linear motion. The HUD system 10 may be moved by manual adjustment or automatically through algorithms or with sensors and feedback-loop-system for a fully automatic adjustment based on, for example, eye-tracking. According to an example embodiment, at least one support arm 4 may be configured to be rotated around a A-axis. The movement may be clockwise or counterclockwise around the A-axis. At least one support arm 4 may also be configured to be tilted up and down according to a rotation arrow D in Figure 8a. The example of Figures 7a and 7b show a central base 2 of a support means 7. According to an example embodiment, the central base 2 comprising at least one arm rotation lock 41 configured to allow or prevent the at least one support arm 4 to rotate around the central A-axis. When the arm rotation lock 41 is engaged, the at least one support arm 4 may not rotate in any direction, and when the arm rotation lock 41 is disengaged the at least one support arm 4 may move back and forth around the A-axis according the arm rotation arrow J.

The example of Figure 7a describes that the arm rotation lock 41 comprising one or more springs 55 per support arm 4, which springs 55 pull the arm rotation lock 41 so that it is normally in locked position. To release the arm these arm rotation locks 41 may be pulled outward. According to an example embodiment, each support arm 4 has own arm rotation lock 41, thus allowing locking or moving at least one support arm 4 at a time. According to an example embodiment, at least one support arm 4 is configured to be rotated around a central A-axis by an actuator. The actuator may be a motor that is configured to move the at least one support arm 4 around a central A-axis of the central base 2 according to the rotation arrow J. A maximum turning angle α of the one support arm 4 may be about 90°, or between about 25° and about 80°, for example. According to an example embodiment, the actuator 9 may be configured to move the at least one support arm 4 at a time, thus, only one arm 4 may be moved. This may be very convenient because, for example, when turning the head on one side or switching line of sight, it may be sufficient to change the position of one support arm 4 only and translate rotation of A-axis. Moving the support arm 4 may allow translation or inclination of the central A-axis of the support means 7 in respect to the central X-axis of the cabin 8. Inclination may be done by rotation of joints 17. This translation may be needed since typically the seat of the driver may be fixed. When turning the HUD system 10, for example, 90° the canter of the support means 7 may need to move. According to an example embodiment, the seat of the driver is allowed to move. In this case, the centre of the support means 7, the A-axis, may be fixed in respect to the center of the cabin 8, the X-axis.

According to an example embodiment, when moving the position of one support arm 4, it would require to compensate with the linear movement of at least one rod 18, 19. Thus, it may need a synchronized angular movement of support arms 4, rotation D of joints 17, and/or extension/retraction movement of support arms 4. This may translate the whole central base 2 in the cabin 8 and shift position of A-axis. According to another example embodiment, when the central base 2 and A-axis is fixed, the head movement would be compensated by moving the seat to a new position.

According to an example embodiment, when the seat of the driver is moving, then the central base 2 of the support means 7 is fixated in respect to the central X-axis of the cabin and the eyebox 22 will change the position.

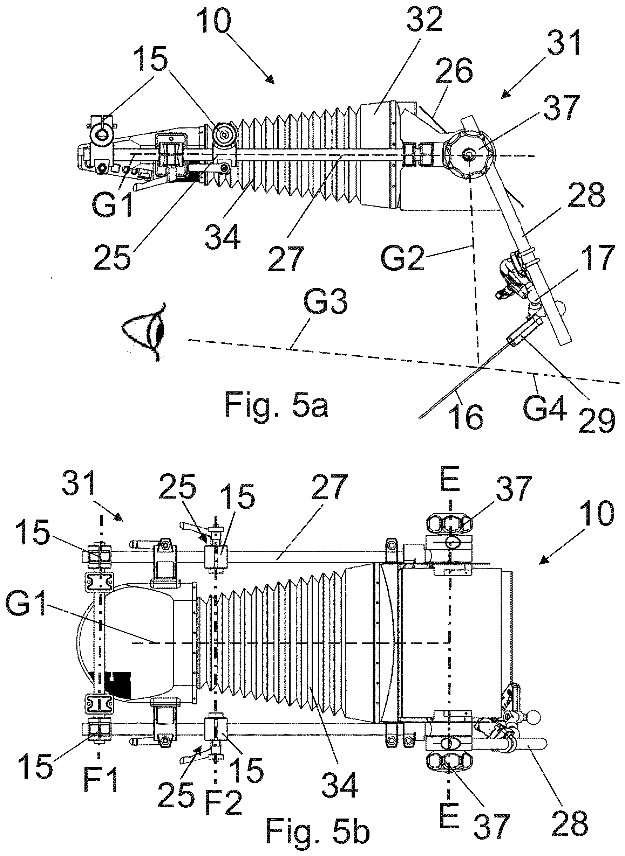

The example of Figure 5a shows a HUD system 10 seen from the side and the example of Figure 5b shows the HUD system 10 of Figure 5a seen from above. The attachment means 31 may comprise second locking means 15, which are configured to attach the HUD system 10 to the first locking means 13 of the attachment arrangement 3. The HUD system 10 connected to the attachment arrangement 3 may also be attached to the fastening means other than the support means 7 described above. The HUD system 10 may be attached to the cabin 8, fastening means, or a support means 7 of the vehicle or machine removably and is, in accordance with the claimed invention, rotatably allowing the removal and re-installation of the HUD system 10, as well as rotation of the HUD system 10 according to the user's head movements or switching line of sight, eye focus, or sight focus.

The fastening means comprising support means 7 to which the attachment arrangement 3 is configured to be attached. According to another example embodiment, the support means 7 further comprising several support arms 4.

According to an example embodiment, system 1 is configured to adjust the horizontal and/or vertical position of the virtual image 24 and/or eyebox 22 by adjusting the horizontal and/or vertical position of the HUD system 10 in respect to the cabin 8 by moving the support arms 4 and/or by adjusting the length of the support arms 4. The length of the support arms 4 may be adjusted in relation to the desired virtual image position, eyebox position, or something else. The length of the support arms 4 may be adjusted in relation to the sought A-axis position appropriate for a certain new virtual image horizontal position, or to a new sought eyebox 22 position, for example.

According to an example embodiment, each support arm 4 comprising a first end 5 and a second end 6 and the second ends 6 of the support arms 4 are configured to be pushed against pillars or pulled from the pillars or other internal structures of the cabin 8 of the vehicle or machine, thereby enabling surface contacts between the support arms 4 and the cabin 8. The support arms 4 may also be wires. When the support arms 4 are wires the pushing reaction force against the pillars may be replaced by a pulling reaction force by the pillars. The HUD system 10 may be attached to the cabin 8 or a support means 7 by a ball joint 52 or a sliding plate mechanism. An example of Figures 2a and 2b show a harvester comprising a HUD system 10 semi-fixed to the cabin 8 of the harvester. The cabin 8 may be rotatable. The only fixed degree of freedom may be the horizontal rotation of the virtual image 24. All other movements may remain, for example, vertical movement of the virtual image 24 is achieved by tilting the fold mirror 26, and/or the HUD apparatus 32 itself. The HUD system 10 is pointing 90° to the right in Fig 2b. According to an example embodiment, the HUD system 10 is mounted semi-fixed in a cabin 8 that moves. This kind of horizontally non-moving mounting in respect to the cabin may be possible for example in a forestry harvester, wherein the cabin 8 may turn around 360° in respect to the surroundings.

According to an example embodiment, the HUD apparatus 32 further comprising a bellow 34 and the attachment means 31 further comprising one or more optical axis rods 27. The bellow may be a protective cover. An example of figure 3 shows that the observer 20 tilt the HUD system 10 up and down or rotate around the A-axis by gripping the optical axis rods 27 by hands. The HUD system 10 may be unlocked for tilting by tilting means 25. Tilting and rotating may also be done automatically. The optical axis rod 27 may have fixed length or they may be adjustable for adjusting the distance between the intermediate image 12 and optical system 14. According to an example embodiment, the optical axis rods 27 may change in length or it may have a fixed length. The optical axis rods 27 may hold elements, like the fold mirror 26, attached to it and these individual elements may slide, tilt, or be intentionally deformed along the optical axis rod or rods 27. According to an example embodiment, the distance between relay lens and fold mirror 26 may be adjusted. Also, other lenses and optical components may be bend in a controlled manner to achieve optical effects.

The HUD apparatus 32 may further comprise a picture generating unit (PGU) 51 and an optical system 14. The optical axis rod 27 may be configured to adjust the distance between the PGU 51 and the optical system 14. The distance between the PGU 51, and the intermediate image 12, and the optical system 14 may be adjusted by sliding these individual elements along the optical axis rod or rods 27. These movements may in turn generate desired changes of focal plane distance and size of the virtual image 24. Similar effects may be obtained by displacing the distance between the fold mirror 26 and the combiner.

The movement of the components along the one or more optical axis rods 27 may also include a deliberate deformation of optical components to achieve desired optical results on the virtual image 24. For example, by deforming the relay lens in a controlled manner, a distortion of the virtual image 24 may be achieved that, for example, compensates for the distortion created by a certain curved windshield-combiner. A deliberate deformation of the combiner follows the same principle. The examples are not limited to a deliberate or compensation of an undeliberate deformation of any certain optical element, rather to the principle of deforming, translating, rotating, tilting, and/or twisting any optical element to achieve desired optical result.

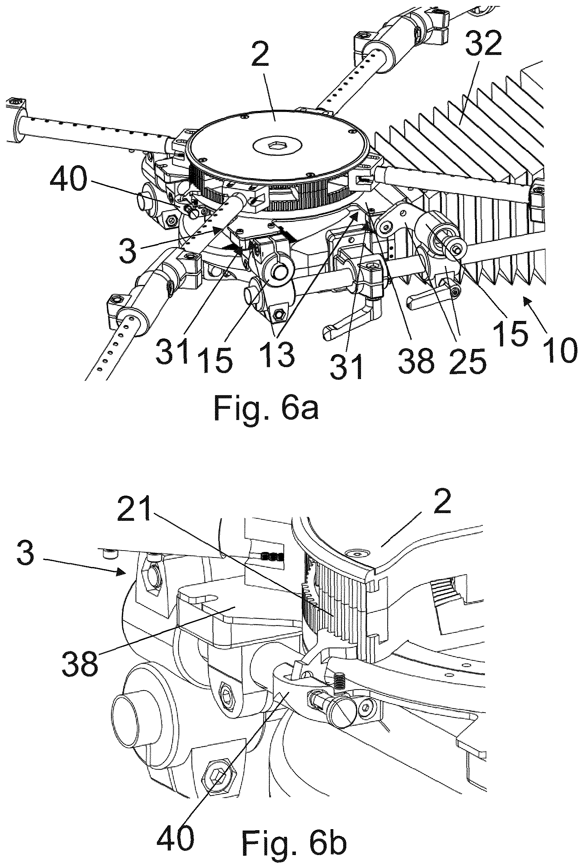

According to an example embodiment the attachment means 31 further comprising tilting means 25 for tilting the HUD projector 10. The tilting means 25 may be used to tilt the HUD projector 10 up or down according to eye and/or head movements. The tilting means 25 may comprise a ball joint 52. The tilting means 25 may also comprise a linkage as seen in Fig 6a, giving it suitable tilting characteristics when being rotated and thus tilting the HUD apparatus 32

According to an example embodiment, the attachment means 31 further comprising one or more combiner holding rods 28 configured to be attached to the optical axis rod 27. The combiner holding rod 28 may be rotated and/or elongated. There may be one or two combiner holding rods 28, depending on weight or accommodation of the separate combiner 16. Both of these movements may affect the virtual image 24, like with the rotation of a fold mirror 26 or a tilt mirror. These rotations and translations may move the position angle, offset, and/or size of the virtual image 24. The one or more combiner holding rods 28 may be attached to the optical axis rod 27 pivotally by rotation means 37. The rotation means 37 may comprise a joint, or rotating screw, for example. The rotation means 37 may also be rotated automatically by an actuator 9, like a motor. The rotation means 37 may move or tilt fold mirror 26 around an E-axis and thus translating the virtual image up or down 24 in the horizontal plane. The rotation means 37 may equally tilt the fold mirror 26 and the separate combiner 16 or the separate combiner 16 only. This may be important for the virtual image 24 position as well as the accommodation of the HUD apparatus 32 and the separate combiner 16.

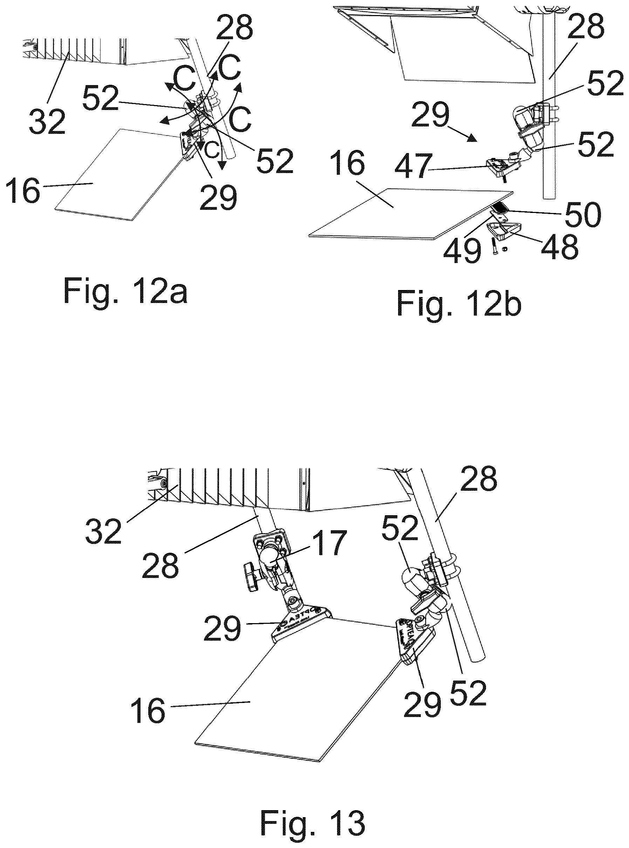

According to an example embodiment, the HUD system 10 further comprising one or more holding means 29 for attaching the separate combiner 16 to the HUD system 10 or the cabin 8. The one or more holding means 29 may be configured to be attached to the combiner holding rod 28. The holding means may be a combiner clamping means that may clamp the separate combiner 16. The example of Figure 12a shows HUD system 10 comprising one holding means 29 and the example of figure 13 shows HUD system 10 comprising two holding means 29. One or more holding means 29 may be attached to the combiner holding rod 28 pivotally and/or rotatably by one or more joints 17, for example, a ball joint 52, or without a ball joint 52. An example of Figure 12 shows that there can be two ball joints 52. The joint 17 may also be rotated automatically by an actuator 9, like a motor. The HUD system 10 may further comprise one or more separate combiners 16. The holding means 29 may be configured to fasten the separate combiner 16 to the combiner holding rod 28.
According to an example embodiment the HUD system 10 or apparatus 32 may comprise the separate combiner 16. According to another example embodiment, the combiner may be integrated to or with a planar or non-planar windshield of a vehicle or machine. According to an example embodiment, the windshield acts as a combiner of the HUD system 10. According to an example embodiment, a combiner of the HUD system 10 is integrated in the windshield. The HUD system 10 may comprise a windshield-combiner 53, wherein the combiner is integrated in the wind-shield. According to an example embodiment, the system 1 comprises a cabin 8. According to an example embodiment, the cabin 8 may be rotationally symmetric and may comprise a HUD system 10, and/or a windshield-combiner 53. This kind of cabin 8 may be seen, for example, from Figure 2c-2e.

According to an example embodiment, the windshield-combiner 53 is integrated with a windshield, which may at least partially rotationally symmetric about a vertical X-axis, which may also be the central, rotational, and pivot A-axis of the HUD system 1. The central A-axis may substantially coincide with the vertical X-axis. By this way, the shape of the used portion of the windshield-combiner 53 may stay substantially unchanged in respect to the HUD apparatus 32 when the HUD system 10 is rotated around the central A-axis, as can be seen from Figures 2c and 2e wherein the A-axis may be equal X-axis.

According to an example embodiment, the combiner which may or may not be integrated with a windshield is shaped such, that the shape and/or position of the used portion of the combiner is substantially constant in respect to the HUD projector when the HUD system is oriented to different vertical and/or horizontal viewing directions.

According to an example embodiment, when the position of the virtual image 24 and the eyebox 22 are varied, the changes in distortion correction are compensated digitally by distorting the presented image on the image source.

An example of Figure 12b shows an exploded image of holding means 29. According to an example embodiment, the holding means 29 comprise first and second half 47, 48. The first half 47 may comprise a metal plate 49 and a non-slip 50 material disposed on the lower surface of the first half 47 and the second half 48 may comprise a metal plate 49 and a non-slip 50 material disposed on the upper surface of the second half. The non-slip material is rubber, for example. The structure may be a sandwich structure in which the first half 47 may be placed on top of the second half 48 and releasably attached to each other so, that at least part of the combiner 16 may be attached between the first and the second half 47, 48 immovably. The form of the holding means 29 may be triangle and the first and the second half may be attached to each other by screws, for example. At least one corner of the combiner 16 may be attached between the first and the second half 47, 48, thus making the triangular form of the holding means 29 best suited for this purpose. The metal may strengthen a structure of the first and the second half 47, 48 and the rubber may prevent movements of the combiner 16 when it has been attached between the first and the second half 47, 48. The rubber may be non-slip and compressible and thus not cracking the glass. It may also have the function of squeezing gently on the glass to fixate it without cracking it. The first and the second half 47, 48 may be plastic. The holding means 29 may clamp around the brittle glass-combiner 16 with a high-force, and with as little surface impact as possible, thus having very small contact surface. The holding means 29 may be small and neat, thus, not obstruct the visibility of the driver. Ideally the combiner 16 including its holding mechanics, may be almost invisible.

Figure 4 illustrate example of a HUD apparatus 32 that may be used in HUD systems 10 of Figures 1a, 1b, 2a-2e, 3, 5a, 5b, 6a and 6b, for example. The HUD apparatus 32 may comprise a picture generating unit (PGU) 51, a HUD optical system 14 and a combiner. The combiner may be a separate combiner or a windshield-combiner 53. The data processing unit (DPU) 11, which the HUD apparatus 32 may also comprise, may control the PGU 51. According to an example embodiment, the HUD projector comprises one or more PGUs 51 connected to DPUs 11. The one or more PGUs 51 and DPUs 11 may be located in the same or different entity. This means that one or more DPUs 11 may or may not be located in the HUD apparatus 32. More generally, the HUD apparatus 32 may comprise one or more PGUs 51, one or more HUD optical systems 14. The HUD system 10 may also comprise one or more combiners. An optical component that is meant to be used in the HUD apparatus 32 and particularly in the HUD optical system 14 may comprise a Fresnel lens. Both sides of the Fresnel lens may be curved, and radiuses of curvatures of the opposite sides may be on or directed to a same side of the Fresnel lens. That is, the opposite surfaces may curve similarly or to similar directions. In an embodiment, they may curve also the same manner.

The PGU 51 may comprise one or more light sources that form an illuminating image source and at least part of its light propagates through the HUD apparatus 32 up to the eyebox 22. The image source may be or may be formed by the PGU 51 alone, but it may also be or may be formed by a diffusing screen, which the PGU 51 may project the image on, for example. The image of the PGU 51 may be a still image, a video image or a motion picture image, the video image and the motion picture referring to a sequence of images or sequence of parts of images in such rapid succession that the observer 20 is enabled to experience the illusion of movement.

The HUD optical system 14 may form a magnified virtual image 24 of the image source, and reflect at least a portion of the light of the image source to the combiner, which reflects at least a portion of the same light towards the eyebox 22, i.e. towards an observer 20, who is typically an operator of a machine comprising the HUD apparatus 32. Here the magnification includes a magnification by one i.e. the image size does not change in addition to other values which may expressed using positive or negative real or rational numbers. A volume from which the virtual image 24 can be at least partially seen by eyes of the observer 20, is called as an eyebox 22. The HUD apparatus 32 may be designed such that the observer 20 can see the virtual image 24 through the combiner approximately a few meters away from the observer 20, for example. The distance between the observer 20 and the virtual image 24 may vary from about 0.5 meter to about infinity, for example. The distance between the observer 20 and the virtual image 24 may typically be between 2 m and 10 m, for example. A full solid angle or a full plane angle of the virtual image 24 seen from the eyebox 22 is called field-of-view (FOV). A maximum diameter of the FOV may be between about 2° and about 90°, or between about 5° and about 25°, for example. A diameter or a diagonal of the eyebox 22 may be between about 70 mm and about 400 mm, or between about 100 and about 250 mm, for example. The eyebox 22 may have a shape of a cube, ellipsoid, or a sphere, for example, but not limited to them. The HUD optical system 14 may form a magnified virtual image 24 of the image source, and reflect at least a portion of the light of the image source to the combiner 16, which reflects at least a portion of the same light towards the eyebox 22, i.e. towards an observer 20, who is typically an operator 20 of a machine comprising the HUD apparatus 32. Here the magnification includes a magnification by one i.e. the image size does not change in addition to other values which may expressed using positive or negative real or rational numbers. A volume from which the virtual image 24 can be at least partially seen by eyes of the observer 20, is called as an eyebox 22. The HUD apparatus 32 may be designed such that the observer 20 can see the virtual image 24 through the combiner 16 approximately a few meters away from the observer 20, for example. The distance between the observer 20 and the virtual image 24 may vary from about 0.5 meter to about infinity, for example. The distance between the observer 20 and the virtual image 24 may typically be between 2 m and 10 m, for example. A full solid angle or a full plane angle of the virtual image 24 seen from the eyebox 22 is called field-of-view (FOV). A maximum diameter of the FOV may be between about 2° and about 90°, or between about 5° and about 25°, for example. A diameter or a diagonal of the eyebox 22 may be between about 70 mm and about 400 mm, or between about 100 and about 250 mm, for example. The eyebox 22 may have a shape of a cube or a sphere or an ellipsoid, for example but not limited to them.

A purpose of the PGU 51 with or without the diffusing screen, i.e. a purpose of the image source is to create light in visible wavelengths with an image which can be a real image or a virtual image. The image source may then be presented to the observer 20 as a magnified virtual image by the help of HUD optical system 14 and the combiner.

A purpose of the combiner is to reflect part of the light arriving from the HUD optical system 14 to the observer 20, while being substantially transparent such that the observer 20 can see through the combiner in a substantially unobscured way. Another purpose of the combiner is, together with the HUD optical system 14, to participate to a formation of the virtual image 24 of the image source in a predetermined location, by combining and merging the virtual image 24 to the see-through virtual image 24 on top of the real world image. The virtual image 24 may be pointing into a known direction from the eyebox 22 in respect to the real-world scenery. On the other words, there may be a known correspondence between the field positions in the virtual image and the real-world scenery to provide a composite view. This calibration may include a camera, a laser, and a feedback-loop-system that will adjust the position and perspective of the virtual image 24 all the time or at least when the HUD apparatus 32, the virtual image 24, and/or the observer 20 is moved. Some or all of this calibration may also be done through software. This may mean that the virtual image 24 may be moved by moving the image generated in the PGU 51 such as an intermediate image 12. This intermediate image 12 may be the image (plane) that is reflected through the rest of the HUD lenses and mirrors and that finally creates the virtual image 24. For example, if the HUD points to a stone in the field in front or at any position of the vehicle or machine, the virtual image 24 is pointing at the location where the stone really is seen from the observer's 20 current eyebox 22 position. To achieve this, there may be a calibration-algorithm that from time to time, and particularly when the HUD system 10 is moved may do it manually or automatically.

According to an embodiment, the system comprises a laser source generating at least one laser beam to a known direction in respect to the cabin 8, and a camera which is arranged to view the virtual image 24 through the combiner. When the virtual image position and orientation changes, the camera may be used to capture the positions of the at least one spot generated by the at least one laser beam. The at least one spot may be formed onto a surface of the cabin 8 of a vehicle or machine, or onto ground, for example. As the positions of the at least one spot are known in respect to the cabin 8, the data processing unit 11 may be used to calculate the correspondence between the field positions at the virtual image 24 and the real directions from the eyebox 22, i.e. to calibrate the virtual image position.

According to an embodiment the system may comprise a calibration system, like data processing unit 11, that will perform the calibration-algorithm. The calibration system may be configured to check if the virtual image 24 is in correct position or reference angle in respect to the real word scenery. If the position or reference angle is correct, calibration may not be need. If the position or reference angle is not correct, the calibration system may be configured to ask at least one sensor 46 to provide a new real-world map or a reference, for example, an axis or plane, i.e. a black painted line on a wall. After that the calibration system may be configured to interpose at least one reference point on top of the input reference, for example, by shooting a laser onto the real-world map and identify position of the sensor 46 response. Next the calibration system may be configured to check if the virtual image 24 is in a correct position or an angle in respect to the real-world scenery. If the position or reference angle is correct, no further calibration may be need. If the position or reference angle is not correct calibration system may be configured to move the virtual image 24 until it is in the right position or reference angle.

According to an example embodiment, the wherein the system is configured to do image calibration and/or image stabilisation.

According to an example embodiment, the system comprises sensors 46, for example, position or acceleration sensors, which provide information about changes in positions and orientations of the cabin 8 and different parts of the HUD system 10, to the data processing unit 11. By using the position and orientation information, the data processing unit 11 may be used to calculate the required virtual image movement in respect to the HUD system 10 in order to keep the virtual image position and orientation at the desired location in respect to the eyebox 22. When the required virtual image movement is small, the position and orientation of the virtual image 24 may be adjusted by adjusting the position and orientation of the image content within the FOV of the HUD apparatus 32. When the required virtual image movement is larger, the position and orientation of the virtual image 24 may be adjusted by the mechanical adjustments described above in this description. The sensors 46 and the virtual image adjustment means thus may provide method for stabilizing the image seen by the observer 20, which may be beneficial for example in OHV cabins 8 that may vibrate and shake during the vehicle operation.

In a simple form, the combiner may comprise a window, which is at least partially reflective and partially transparent. The window may be planar. The window may reflect the light from the HUD optical system 14 to the eyebox 22, and so relocates the virtual image 24 provided by the HUD optical system 14 to a desired location in front of the eyebox 22. The combiner may also be integrated to or with a windshield of a machine.

According to an example embodiment, the combiner 16 may be capable of performing an optical function to the reflected light similar to a positive or negative curved mirror or lens in addition to this reflective functionality. The optical function may be implemented by a curved shape, or by holographical or micro-optical structures, for example.

According to an example embodiment, the combiner, tilt mirror 26, relay lens, and/or intermediate image may be curved also for a reason that it may be integrated with a curved windshield, for example. In that case, the combiner may act as a concave mirror, which may be biconic and aspherical.

According to an example embodiment, the combiner may comprise a sheet of optically transparent material, which may be planar or curved, with a partially reflective and partially transparent coating on one side of the sheet.

According to an example embodiment, the combiner may comprise a hologram layer or micro-optical structure which acts as a partially reflecting and transmitting layer.

According to an example embodiment, the combiner may be a film type, i.e. it may comprise an optical film, which is at least partially transparent and partially reflective and spanned between two rigid holders.

According to an example embodiment, the HUD optical system 14 may comprise one or more fold mirrors 26 for turning the optical path, i.e. guiding light beam, to fit the HUD system better in the vehicle or machine cabin 8, for example.

A distance of the virtual image 24 from the eyebox 22 may be adjustable, for example. In an example embodiment, the adjustment may be performed by adjusting a position of the intermediate image 12 with respect to the HUD optical system 14. In an embodiment, a distance between the Fresnel lens and the diffusing screen may be adjustable. For example, the position of the diffusing screen or the Fresnel lens, or both, may be adjustable in respect to the HUD optical system 14. By that way, the distance of the virtual image 24 may be adjustable between few tens of centimeters and infinity, for example. This may be beneficial for adjusting a position of the virtual image 24 to match with the position of each work operation, for example in forest harvester or tractor which may perform various work tasks in different distances.

Similar to the distance, the orientation and lateral position of the image source with respect to the HUD optical system 14 may be adjustable. The image source may be moved in Vx position i.e. laterally, along the optical axes G1-G4, or rotated or tilted in respect to optical axes G1-G4. This kind of intermediate image 12 manipulation may result a virtual image 24 manipulation. This may be used to tilt and to move the observed virtual image 24 for better ergonomics. For example, tilting the image source can be used to tilt the virtual image 24, and moving the image source can be used to move a position the virtual image 24. Still, the shape of the image plane of the image source can be adjusted for adjusting the shape of the image plane of the virtual image 24. For example, by adjusting the field curvature of the image source, the field curvature of the virtual image 24 can be adjusted. This is important for augmented reality (AR), since the idea may be to interpose digital information on top of real-world scenery to provide a composite view.

The fold mirror 26 may also be positioned between the Fresnel lens and the combiner. The orientation of the fold mirror 26 and/or the combiner may be adjustable either manually or by an actuator such as a motor, which allows adjusting virtual image position with respect to the eyebox 22.

The example of Figure 8a shows a system 1 comprising support means 7 and an attachment arrangement 3. The example of Figure 6a shows an attachment arrangement 3. According to an example embodiment, the attachment arrangement 3 comprising first locking means 13, and the HUD system 10 comprising a HUD apparatus 32 and attachment means 31 to which the HUD apparatus 32 may be configured to be attached to. The HUD system 10 may be similar to that shown in Figure 5a and 5b. The attachment means 31 may comprise second locking means 15 configured to lock the HUD system 10 to the first locking means 13 of the attachment arrangement 3. The second locking means 15 may be configured to lock the HUD system 10 to the first locking means 13 removably and rotatably. The second locking means may be a two-way connector clamp, for example.

The example of Figure 7a shows an attachment arrangement 3 comprising first locking means 13, and attachment means 31 comprising second locking means 15. According to an example embodiment, the first or the second locking means 13, 15 comprise at least one of the following: a support plate 38, ball joint 52, sliding disk 54, and/or an arm extension or retraction lock 42. According to an example embodiment, the first locking means 13 comprising the support plate 38 and the second locking means 15 comprise the arm extension or retraction lock 42. The arm extension and retraction lock 42 may be embedded inside the central base 2 and may act, engage, or disengage on the base gear 23. According to another example embodiment, the second locking means 15 comprising support plate 38 and the first locking means 13 comprise the arm extension or retraction lock 42.

The example of Figure 6b shows an attachment arrangement 3. When the HUD system 10 is in right position it may be locked to its place by engaging the HUD system 1 rotation lock 40 onto the support arm 4. According to an example embodiment, the rotation lock 21 prevents rotation of the HUD system 10.
the HUD apparatus 32 comprises a collapsible folding part, bellow 34. The bellow 34 is a cover-protection and it may be used to prevent dust or light entering in or exiting out. It may allow translation, rotation, or tilting of the optical components installed inside or to it. The attachment means 31 may further comprise one or more optical axis rods 27. The one or more optical axis rods 27 may be configured to adjust distance between the intermediate image 12 and optical system 14 and tilting means 25 for tilting the HUD apparatus 10.

According to an example embodiment, the HUD system 10 further comprising one or more combiners. The attachment means 31 may further comprise a combiner holding rod 28 configured to be attached to the co one or more optical axis rods 27, and holding means 29 configured to be attached to the combiner holding rod 28. According to an example embodiment, the one or more combiner holding rods 28 can also be freely fixed in the cabin 8, for example, with a suction cup to the windshield. The holding means 29 may be configured to fasten the separate combiner 16 to the combiner holding rod 28. The holding means 29 may hold the separate combiner 16, move it, tilt it, and even deform it to achieve the desired optical result

An example of Figure 5a shows an optical axes G1-G4, which may be the center of the light or image created in the PGU. The optical axes G1-G4 may go through a series of optics and bounces on the fold mirror 26 and combiner until reaching the eye.

An example of Figure 5b shows F1-axis and F2-axis where the second locking means 15 are attached. The rotation of F1-axis and translation or rotation of F2-axes allow vertical tilting of HUD apparatus 32.

The example of Figure 14 relates to the movement of the virtual image 24 in all degrees of freedom. The virtual image 24 may be moved as a whole, as a plane, or the virtual image 24 may be considered a plane consisting of a matrix of pixels as shown in Figure 14. Through the deliberate and controlled deformation of optical components in respect to each other along or in relation to the optical axis rods 27 and/or other ways, the virtual image 24 may also be moved at a pixel-level. The movement or deformation of the virtual image 24 at a pixel-level, may be interesting for compensation of undeliberate deformation of optical components in the HUD system 10, for example, in the case when a windshield-combiner 53 may be used as shown in Figures 2c and 2d, There may be situations where the temperature working environment of the machine is very cold, for example, -20° C. In such a working environment, the combiner might suffer undeliberate thermal deformations causing virtual image 24 distortion. Which in turn may be compensated through the deliberate and controlled deformation of optical components in respect to each other, along or in relation to the optical axis rods 27, and/or other ways.

According to an example embodiment, when moving the virtual image 24 as a whole, i.e. as a plane, the proposed solution can accommodate all six degrees of movement freedom. An example of Figure 14 shows component movements, without limiting to them.

According to an example embodiment, vertical movement of virtual image plane (Vy) is achieved, for example, by moving the HUD system 10 through the tilting means 25, by adjusting the orientation and/or the position of the fold mirror 26 and/or combiner, and/or by moving the HUD system 10 along A-axis.

According to an example embodiment, horizontal movement of virtual image plane (Vx) is achieved for example by rotating the HUD system 10 around A-axis and/or by adjusting the orientation and/or the position of the fold mirror 26 and or the combiner. Depending on the possible movement of the operator 20 (Oc), a rotation of HUD system 10 around A-axis may be needed to be compensated with a translation of A-axis in respect to X-axis and operator in order to get both virtual image plane and eyebox 22 to the desired position and orientation.

According to an example embodiment, depth movement of virtual image plane (Vz) can be achieved, for example, by changing the position of the intermediate image 12 in respect to the optical system 4 and/or by adjusting the distance of the combiner in respect to the optical system 14.

According to an example embodiment, tilting of virtual image plane along its own axis Y (Rot Vy) can be achieved, for example, by tilting the combiner around the joint 17.

According to an example embodiment, tilting of virtual image plane along its own axes Vx, Vy, Vz (Rot Vx) can be achieved, for example, by tilting the combiner around the joint 17.

According to an example embodiment, tilting of virtual image plane along its own axis Z (Rot Vz) can be achieved, for example, by tilting the HUD system10 around the optical axes G1-G4 with the ball joint 52 illustrated in Figure 2d.

The abovementioned movements may also be achieved through software movements of the intermediate image 12, and/or by re-positioning, re-angling, or re-shaping the intermediate image 12 on and around the optical axes G1-G4. Similar movements may be done for eyebox 22 (E) positions (Ey, Ex, Ez, Rot. Ey, Rot. Ex, Rot. Ez) thorough the methods described above. Tilting of rotation center of HUD system 10 (A-axis), cabin center (X-axis), and/or operator axis (O-axis) in respect to each other, may also result in movements of virtual image 24 and eyebox 22.

According to an example embodiment, the system 1 comprising at least one eye tracking device 30 configured to measure eye positions and eye movements. The eye tracking device 30 may comprise one or more sensors to track where a person is looking to and to move at least the HUD system 10 and/or support means 7 according to the eye movements of the observer 20, and/or sight location including focal plane, like boresight. One or more eye tracking devices 30 may be located inside the cabin 8 of the vehicle or machine. The eye tracking devices 30 may be attached to the combiner holding rods 28. The eye tracking devices 30 may be a camera attached to the window looking at the observer 20. The camera may look at the head position and position of the pupils (the line of sight), and/or even at the focus of the eyes and/or size of the pupils of the observer 20.

According to an example embodiment, the system 1 may comprise at least one actuator and at least one of the following: an eye tracking device 30, a gesture-control device 44, a voice-control device 45, and/or a sensor 46. The one or more eye tracking devices 30, gesture-control devices 44, voice-control devices 45, and/or sensors 46 may comprise at least one of the following: camera, normal wave length camera, infrared camera, radar, sonar, video, microphone, laser, scanning laser, lidar, a tilt-sensor, rotational sensor, and/or windshield curvature sensor, for example, but not limited to them.

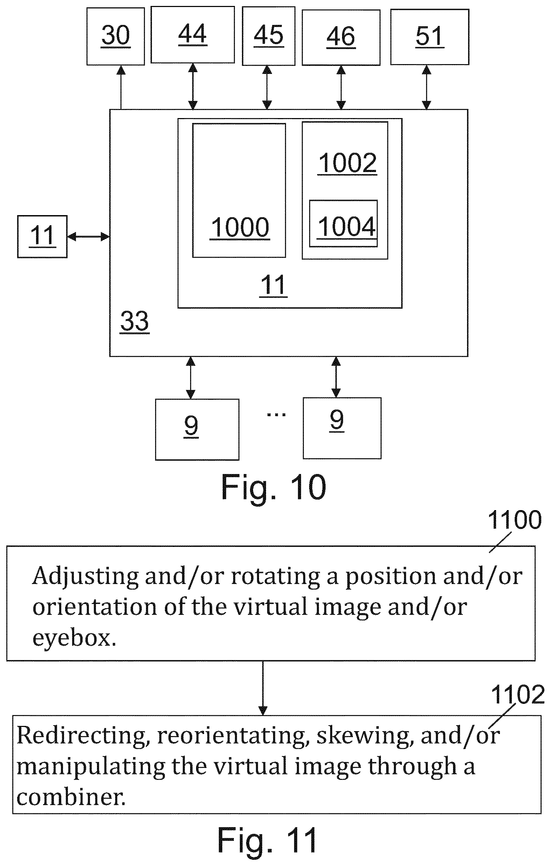

The example of Figure 10 illustrates an example of an overall architecture in which examples of disclosed embodiments may be applied. According to an example embodiment the system 1 comprising the controller 33 comprising at least one data processing unit 11. The controller 33 may be part of the system 1 and hooked up in connection with the system 1, from which the operation of the system 1 may be managed by means of user interface of different kind. The controller 33 may also be part of the support means 7 or HUD system 10. In addition, the controller 33 may be located inside the cabin 8 near the observer 20, wherein it is easy to use. The controller 33 may be a remote-control apparatus, for example joystick.

The system 1 discussed above may comprise one or more data processing units 11. The data processing unit (DPU) 11 may comprise one or more processors 1000 and one or more memories 1002 including computer program code 1004. According to an example embodiment, the one or more memories 1002 and the computer program code 1004 with the one or more processors 1000 may be configured to monitor data conveyed by the at least one eye tracking device 30 and to control the at least one actuator 9 by utilizing the monitored data conveyed by the at least one eye tracking device 30 to cause the system 1 to move at least the HUD system 10 and/or support means 7 according to eye movements of the observer 20. There may be a correlation between the macroscopically movement of the HUD apparatus 32 with the DPUs 11, and the microscopically movement of the intermediate image 12 by the DPU 11. Thus, the virtual image 24 may be moved macroscopically and/or microscopically. The virtual image 24 may be moved both with software and mechanically. Software may, for example, move virtual image 24 microscopically on the intermediate image plane in Vx and Vy directions very precise and fast. Rotation of the virtual image 24 in horizontal plane around A-axis may only be done mechanically. This means that in some cases the virtual image movements ,may be done both with software and mechanically. Mechanical movements may also be made with software.

According to an example embodiment, the system 1 comprising further one or more eye tracking devices 30, gesture-control devices 44, voice-control devices 45, and/or sensors 46. According to an example embodiment, the one or more memories 1002 and the computer program code 1004 with the one or more processors 1000 may be configured to monitor data conveyed by the at least one of the following: an eye tracking device 30, a gesture-control device 44, a voice-control device 45 and/or a sensor 46 to control the at least one actuator 9 by utilizing the monitored data conveyed by the at least one of the following: an eye tracking device 30, a gesture-control device 44, or a voice-control device 45, and/or a sensor 46 to cause the system 1 to move at least the HUD system 10, support means 7, cabin 8, and/or attachment arrangement (3) according to eye movements, gestures, voice of the observer 20, and/or information from the at least one sensor 46. In addition, the system may move fold mirror 26, combiner, and/or HUD apparatus 32.

According to an example embodiment, when the data processing unit 11 gets data conveyed by the at least one of the following: an eye tracking device 30, a gesture-control device 44, or a voice-control device 45, and/or a sensor 46, it will send picture related information to the picture generating unit (PGU) 51.

Figure 11 illustrates an example of a method in connection with a system 1for a cabin 8 of a vehicle or machine, wherein the system 1 comprising a HUD system 10. The HUD system 10 comprising a HUD apparatus 32 projecting a virtual image 24 within an eyebox 22 to be seen by an observer 20, an attachment arrangement 3 attached to the cabin 8 or other fastening means, and attachment means 31 to which the HUD apparatus 32 is attached to, and wherein the attachment means 31 comprising second locking means 15 configured to attach the HUD system 10 to the attachment arrangement 3.

In accordance with the claimed invention. a position and/or orientation of the virtual image 24 and/or eyebox 22 is adjusted and/or rotated 1100, and the virtual image is redirected, reorientated, skewed, and/or manipulated 1102 through a combiner.

Referring yet to Figures 3 and 4, in accordance with the claimed invention, the vertical position of the virtual image 24 is adjusted by tilting at least one of the HUD apparatus 32, the fold mirror 26, the HUD system 10, and/or the separate combiner 16. In an example embodiment, the vertical position(s) of the virtual image 24 and/or the eyebox 22 are adjusted by tilting at least two of the following: the HUD apparatus 32, the fold mirror 26, and/or the separate combiner 16. In accordance with the claimed invention, the vertical position of the eyebox 22 is adjusted by adjusting the distance between the fold mirror 26 and the separate combiner 16 and by tilting at least one of the HUD apparatus 32, the fold mirror 26, and the separate combiner 16. In an example embodiment, the horizontal direction of the virtual image 24 and/or the horizontal position of the eyebox 22 is adjusted by rotating the HUD apparatus 32 around the central A-axis. In accordance with the claimed invention, the horizontal direction of the virtual image 24 and/or the horizontal position of the eyebox 22 is adjusted by rotating the HUD apparatus 32 around the central A-axis and adjusting at least one of the following: the central A-axis horizontal position in respect to the cabin 8, the fold mirror 26 orientation in respect to the HUD apparatus 32. The horizontal position of the central A-axis may be adjusted by the movable support arms 4 and/or by adjusting the length of the rods 18,19.

According to an example embodiment the system 1 comprising one or more processors 1000 and one or more memories 1002 including computer program code 1004 to push 1100 the free ends of the support arms 4 against the pillars or other internal structures of the cabin 8 of the vehicle or machine, thereby enabling surface contacts between the support arms 4 and the cabin 8.

According to an example embodiment, the system 1 comprising the controller 33 comprising one or more data processing unit 11. The system 1 may comprise one or more data processing units 11. The data processing unit 11 may comprise one or more processors 1000 and one or more memories 1002 including computer program code 1004.

According to an example embodiment, the one or more memories 1002 and the computer program code 1004 with the one or more processors 1000 are configured to lengthen and shorten the at least one support arm 4, push the second end 6 of the at least one support arm 4 against the cabin 8, to rotate the at least one support arm 4 around the central axis A of the central base 2, and/or pivot or rotate the first and the second rod 18, 19 in relation to each other.

According to an example embodiment, the one or more memories 1002 and the computer program code 1004 with the one or more processors 1000 are configured to tilt the HUD system 10, and/or turn the HUD system 10 in the attachment arrangement 3.

According to an example embodiment, the one or more memories 1002 and the computer program code 1004 with the one or more processors 1000 are configured to adjust the distance between the PGU 51 and the optical system14 and/or adjust/deform other optical components.

According to an example embodiment, the one or more memories 1002 and the computer program code 1004 with the one or more processors 1000 are configured to pivot the combiner holding rod 28 in relation to the optical axis rods 27, pivot or rotate holding means 29 in relation to the combiner holding rod 28, and/or pivot the the separate combiner 16 in relation to the holding means 29.

The method shown in Figure 11 may be implemented as a logic circuit solution or computer program. The computer program may be placed on a computer program distribution means for the distribution thereof. The computer program distribution means is readable by a data processing device, and it encodes the computer program commands, carries out the operation of the system 1.

The computer program may be distributed using a distribution medium which may be any medium readable by the controller. The medium may be a program storage medium, a memory, a software distribution package, or a compressed software package. In some cases, the distribution may be performed using at least one of the following: a near field communication signal, a short distance signal, and a telecommunications signal.

According to an example embodiment, a system 1 for a HUD system 10 in a cabin 8 of a vehicle or machine, wherein system 1 comprises a support means 7 comprising: a central base 2, an attachment arrangement 3 attached to the bottom of the central base 3, said attachment arrangement 3 being configured to carry the HUD system 10, and several support arms 4 extending from the central base 2, wherein each support arm 4 comprising a first end 5 at the central base 2 and a second end 6 which is a free end, and wherein the free ends of the support arms 4 are configured to be pushed against pillars or other internal structures of the cabin 8 of the vehicle or machine, thereby enabling surface contacts between the support arms 4 and the cabin 8.

According to an example embodiment, the surface contacts between the support arms 4 and the cabin 8 are destructive or non-destructive.

According to an example embodiment, the HUD system 10 is rotatably attached to the attachment arrangement 3.

According to an example embodiment, the at least one support arm 4 is configured to be rotated around the A-axis.

According to an example embodiment, the at least one support arm 4 comprising a first and a second rod 18, 19, wherein the first and the second rod 18, 19 are connected to each other by a joint 17.

In accordance with the claimed invention, the attachment arrangement 3 comprises first locking means 13, the HUD system 10 comprising a HUD apparatus 32 and attachment means 31 to which the HUD apparatus 32 is attached to, and the attachment means 31 comprising second locking means 15 configured to lock the HUD system 10 to the first locking means 13 of the attachment arrangement 3.

According to an example embodiment, the attachment means 31 further comprising one or more optical axis rods 27, and tilting means 25 configured to tilt the HUD apparatus 10.

According to an example embodiment, the HUD system 10 further comprising a separate combiner 16, and wherein the attachment means 31 further comprising one or more combiner holding rods 28 configured to be attached to the one or more optical axis rods 27, and one or more holding means 29 configured to be attached to the one or more combiner holding rod 28, and wherein the one or more holding means 29 are configured to fasten the separate combiner 16 to the one or more combiner holding rods 28.

According to an example embodiment, the system 1 comprising at least one actuator 9.

According to an example embodiment, the system 1 further comprising at least one of the following: an eye tracking device 30, a gesture-control device 44, a voice-control device 45, and/or sensor 46.

According to an example embodiment, the system 1 comprises one or more processors 1100, and one or more memories 1002 including computer program code 1004, wherein the one or more memories 1002 and the computer program code 1004 with the one or more processors 1000 are configured to monitor data conveyed by the at least one of the following: an eye tracking device 30, a gesture-control device 44, a voice-control device 45, or a sensor 46, and to control the at least one actuator 9 by utilizing the monitored data conveyed by the at least one of the following: an eye tracking device 30, a gesture-control device 44, a voice-control device 45, or the sensor 46 to cause the system 1 to move at least the HUD system 10 and/or support means 7 according to eye movements, gestures, voice of the observer 20, and/or information from the at least one sensor 46.

According to an example embodiment, the one or more memories 1002 and the computer program code 1004 with the one or more processors 1000 are configured to deliberate deformation of optical system 14 to achieve desired optical results on the virtual image 24.

Without limiting the scope of the claims, an advantage of a system for a cabin of a vehicle or machine is that the system is easy and quick to install in a cabin of a vehicle or machine. It is also possible to install and use it without breaking any surfaces of the cabin.

Without limiting the scope of the claims, an advantage of a system for a HUD system in a cabin of a vehicle or machine is the "intelligence" to move around the virtual image according to the operator's sight-position. And with an automated or semi-automated position and perspective adjustment of the virtual image in respect to the real-world scenery so that the virtual image is displayed with the right position, focal plane, and angle in respect to the real-world object or composite view.

Without in any way limiting the scope, interpretation, or application of the claims appearing below, a technical effect of one or more of the example embodiments disclosed herein is that because this arrangement is adaptive and flexible, it allows the HUD system and support means to turn according to the deliberate movements of the user's sight.

It will be obvious to a person skilled in the art that, as the technology advances, the inventive concept can be implemented in various ways. The invention and its embodiments are not limited to the examples described above but may vary within the scope of the claims.

## Claims

1. A system (1) for a cabin of a vehicle or machine, wherein the system (1) comprises a heads-up display, HUD, system (10), the HUD system (10) comprising
a HUD apparatus (32) configured to project a virtual image (24) within an eyebox (22) to be seen by an observer (20),
an attachment arrangement (3) attached to the cabin (8) or fastening means, the attachment arrangement (3) being configured to rotatably allow removal and re-installation of the HUD system (10) inside the cabin (8) and rotation of the HUD system (10) according to the user's head movements or switching line of sight, eye focus, or sight focus;
the attachment arrangement (3) comprising first locking means (13), and attachment means (31) to which the HUD apparatus (32) is attached to, and wherein the attachment means (31) comprise second locking means (15) configured to lock the HUD system (10) to the first locking means (13) of the attachment arrangement (3);
the HUD system further comprising a separate combiner (16) and a fold mirror (26);
wherein the system is configured for adjusting and rotating a position and/or orientation of the virtual image (24) and/or eyebox (22), so that the virtual image is redirected, reorientated, skewed, and/or manipulated through the separate combiner (16) by an adjustment of the vertical position of the virtual image (24) by tilting at least one of the HUD apparatus (32), the fold mirror (26), the HUD system (10), and/or the separate combiner (16);
an adjustment of the vertical position of the eyebox (22) by adjusting the distance between the fold mirror (26) and the separate combiner (16) and by tilting at least one of the HUD apparatus (32), the fold mirror (26), and the separate combiner (16); and
an adjustment of the horizontal position of the virtual image (24) and/or the horizontal position of the eyebox (22) by rotating the HUD apparatus (32) around a central A-axis of a central base of the HUD system and adjusting at least one of the following: the central A-axis horizontal position in respect to the cabin (8), the fold mirror (26) orientation in respect to the HUD apparatus (32).

2. The system (1) according to claim 1, wherein the HUD system (10) is moved automatically using sensors and feedback-loop-system based on eye-tracking.

3. The system (1) according to claims 1 or 2, wherein the cabin (8) is rotatable and preferably wherein the only fixed degree of freedom is the horizontal rotation of the virtual image (24).

4. The system (1) according to claims 2 to 3, wherein the system (1) is configured to adjust a horizontal position of the virtual image (24) and/or eyebox (22) by rotating the HUD apparatus (32) around a central X-axis of the cabin (8), and/or by adjusting orientation of the separate combiner in respect to the HUD apparatus (32).

5. The system (1) according to claims 3 and 4 wherein the HUD system (10) further comprising one or more holding means (29) for attaching the separate combiner (16) to the HUD system (10) or the cabin (8).

6. The system (1) according to any one of the preceding claims, wherein
the system (1) comprises at least one actuator and at least one of the following: an eye tracking device (30), a gesture-control device (44), a voice-control device (45), and a sensor (46), the one or more eye tracking devices (30), gesture-control devices (44), voice-control devices (45), and/or sensors (46) comprising at least one of the following: a camera, a normal wave length camera, an infrared camera, a radar, a sonar, a video, a microphone, a laser, a scanning laser, lidar, a tilt-sensor, a rotational sensor, and/or a windshield curvature sensor;
the system further comprising a controller (33) comprising at least one the data processing unit (11) configured to calculate a correspondence between the field positions at the virtual image (24) and the real directions from the eyebox (22) for calibrating the virtual image position; and
wherein the system (1) is configured to do image calibration and/or image stabilisation.

7. The system (1) according to claim 1, wherein the horizontal position of the central A-axis is adjusted by movable support arms (4) and/or by adjusting the lengths of the rods (18, 19).

8. The system (1) according to claim 7, wherein the system (1) is configured to adjust the horizontal and/or vertical position of the virtual image (24) and/or eyebox (22) by adjusting the horizontal and/or vertical position of the HUD system (10) in respect to the cabin (8) by moving the support arms (4) and/or by adjusting the length of the support arms (4).

9. The system (1) according to claim 7 or 8 wherein
each support arm (4) comprising a first end (5) and a second end (6); and
the second ends (6) of the support arms (4) are configured to be pushed against pillars or pulled from the pillars or other internal structures of the cabin (8) of the vehicle or machine, thereby enabling surface contacts between the support arms (4) and the cabin (8).

10. The system (1) according to claim 9, wherein the system (1) comprises one or more processors (1000), and one or more memories (1002) including computer program code (1004), wherein
the one or more memories (1002) and the computer program code (1004) with the one or more processors (1000) are configured to monitor data conveyed by the at least one of the following: an eye tracking device (30), a gesture-control device (44), a voice-control device (45), and/or a sensor (46), and to control the at least one actuator (9) by utilizing the monitored data conveyed by the at least one of the following: an eye tracking device (30), a gesture-control device (44), a voice-control device (45), and/or the sensor (46) to cause the system (1) to move at least the HUD system (10), support means (7), cabin (8) and/or attachment arrangement (3) according to eye movements, gestures, voice of the observer (20), and/or information from the at least one sensor (46).

11. The system (1) according to claim 10, wherein the one or more memories (1002) and the computer program code (1004) with the one or more processors (1000) are configured to push the free ends of the support arms (4) against the pillars or other internal structures of the cabin (8) of the vehicle or machine, thereby enabling surface contacts between the support arms (4) and the cabin (8).

12. A method of of using the system of claim 1 for automated or semi-automated position and perspective adjustment of a virtual image in respect to the real-world scenery so that the virtual image is displayed at a right position, focal plane, and angle in respect to a real-world object or composite view.

## Patentansprüche

1. System (1) für eine Kabine eines Fahrzeugs oder einer Maschine, wobei das System (1) ein Head-up-Display-(HUD-)System (10) umfasst, wobei das HUD-System (10) Folgendes umfasst
eine HUD-Vorrichtung (32), die ausgebildet ist, ein virtuelles Bild (24) innerhalb einer Eyebox (22) zu projizieren, damit es von einem Beobachter (20) gesehen wird,
eine an der Kabine (8) oder an Befestigungsmitteln befestigte Befestigungsanordnung (3), wobei die Befestigungsanordnung (3) ausgebildet ist, drehbar das Entfernen und Wiederinstallieren des HUD-Systems (10) innerhalb der Kabine (8) und das Drehen des HUD-Systems (10) entsprechend den Kopfbewegungen des Benutzers oder dem Wechseln von Sichtlinie, Augenfokus oder Blickfokus zu ermöglichen;
wobei die Befestigungsanordnung (3) erste Verriegelungsmittel (13) und Befestigungsmittel (31) umfasst, an denen die HUD-Vorrichtung (32) befestigt ist, und wobei die Befestigungsmittel (31) zweite Verriegelungsmittel (15) umfassen, die ausgebildet sind, das HUD-System (10) an den ersten Verriegelungsmitteln (13) der Befestigungsanordnung (3) zu verriegeln;
wobei das HUD-System weiter einen separaten Combiner (16) und einen Umlenkspiegel (26) umfasst;
wobei das System ausgebildet ist zum Einstellen und Drehen einer Position und/oder Orientierung des virtuellen Bildes (24) und/oder der Eyebox (22), so dass das virtuelle Bild durch den separaten Combiner (16) durch eine Einstellung der vertikalen Position des virtuellen Bildes (24) durch Kippen mindestens eines von der HUD-Vorrichtung (32), dem Umlenkspiegel (26), dem HUD-System (10) und/oder dem separaten Combiner (16) umgelenkt, neu orientiert, verzerrt und/oder manipuliert wird;
eine Einstellung der vertikalen Position der Eyebox (22) durch Einstellen des Abstands zwischen dem Umlenkspiegel (26) und dem separaten Combiner (16) und durch Kippen mindestens eines von der HUD-Vorrichtung (32), dem Umlenkspiegel (26) und dem separaten Combiner (16); und
eine Einstellung der horizontalen Position des virtuellen Bildes (24) und/oder der horizontalen Position der Eyebox (22) durch Drehen der HUD-Vorrichtung (32) um
eine zentrale A-Achse einer zentralen Basis des HUD-Systems und Einstellen mindestens eines der folgenden: der horizontalen Position der zentralen A-Achse in Bezug auf die Kabine (8), der Orientierung des Umlenkspiegels (26) in Bezug auf die HUD-Vorrichtung (32).

2. System (1) nach Anspruch 1, wobei das HUD-System (10) automatisch unter Verwendung von Sensoren und eines Rückkopplungssystems basierend auf Eye-Tracking bewegt wird.

3. System (1) nach Anspruch 1 oder 2, wobei die Kabine (8) drehbar ist und bevorzugt wobei der einzige feste Freiheitsgrad die horizontale Drehung des virtuellen Bildes (24) ist.

4. System (1) nach Ansprüchen 2 bis 3,
wobei das System (1) ausgebildet ist, eine horizontale Position des virtuellen Bildes (24) und/oder der Eyebox (22) durch Drehen der HUD-Vorrichtung (32) um eine zentrale X-Achse der Kabine (8) und/oder durch Einstellen der Orientierung des separaten Combiners in Bezug auf die HUD-Vorrichtung (32) einzustellen.

5. System (1) nach Ansprüchen 3 und 4,
wobei das HUD-System (10) weiter ein oder mehrere Haltemittel (29) zum Befestigen des separaten Combiners (16) an dem HUD-System (10) oder der Kabine (8) umfasst.

6. System (1) nach einem der vorstehenden Ansprüche, wobei
das System (1) mindestens einen Aktuator und mindestens eines der Folgenden umfasst: eine Eye-Tracking-Vorrichtung (30), eine Gestensteuerungsvorrichtung (44), eine Sprachsteuerungsvorrichtung (45) und einen Sensor (46), wobei die eine oder mehreren Eye-Tracking-Vorrichtungen (30), Gestensteuerungsvorrichtungen (44), Sprachsteuerungsvorrichtungen (45) und/oder Sensoren (46) mindestens eines der Folgenden umfassen: eine Kamera, eine Kamera mit normaler Wellenlänge, eine Infrarotkamera, ein Radar, ein Sonar, ein Video, ein Mikrofon, einen Laser, einen Abtastlaser, Lidar, einen Neigungssensor, einen Rotationssensor und/oder einen Windschutzscheibenkrümmungssensor;
wobei das System weiter eine Steuereinheit (33) umfasst, die mindestens eine Datenverarbeitungseinheit (11) umfasst, die ausgebildet ist, eine Entsprechung zwischen den Feldpositionen an dem virtuellen Bild (24) und den realen Richtungen von der Eyebox (22) zum Kalibrieren der Position des virtuellen Bildes zu berechnen; und
wobei
das System (1) ausgebildet ist, Bildkalibrierung und/oder Bildstabilisierung durchzuführen.

7. System (1) nach Anspruch 1, wobei die horizontale Position der zentralen A-Achse durch bewegliche Stützarme (4) und/oder durch Einstellen der Längen der Stangen (18,19) eingestellt wird.

8. System (1) nach Anspruch 7,
wobei das System (1) ausgebildet ist, die horizontale und/oder vertikale Position des virtuellen Bildes (24) und/oder der Eyebox (22) durch Einstellen der horizontalen und/oder vertikalen Position des HUD-Systems (10) in Bezug auf die Kabine (8) durch Bewegen der Stützarme (4) und/oder durch Einstellen der Länge der Stützarme (4) einzustellen.

9. System (1) nach Anspruch 7 oder 8, wobei
jeder Stützarm (4) ein erstes Ende (5) und ein zweites Ende (6) umfasst; und
die zweiten Enden (6) der Stützarme (4) ausgebildet sind, gegen Pfeiler gedrückt zu werden oder von den Pfeilern oder anderen inneren Strukturen der Kabine (8) des Fahrzeugs oder der Maschine weggezogen zu werden, wodurch Oberflächenkontakte zwischen den Stützarmen (4) und der Kabine (8) ermöglicht werden.

10. System (1) nach Anspruch 9,
wobei das System (1) einen oder mehrere Prozessoren (1000) und einen oder mehrere Speicher (1002), die Computercode des Computerprogramms (1004) einschließen, umfasst, wobei
der eine oder die mehreren Speicher (1002) und der Computerprogrammcode (1004) zusammen mit dem einen oder den mehreren Prozessoren (1000) ausgebildet sind, Daten zu überwachen, die durch mindestens eines der Folgenden übermittelt werden: eine Eye-Tracking-Vorrichtung (30), eine Gestensteuerungsvorrichtung (44), eine Sprachsteuerungsvorrichtung (45) und/oder einen Sensor (46), und den mindestens einen Aktuator (9) durch Verwenden der überwachten Daten zu steuern, die durch mindestens eines der Folgenden übermittelt werden: eine Eye-Tracking-Vorrichtung (30), eine Gestensteuerungsvorrichtung (44), eine Sprachsteuerungsvorrichtung (45) und/oder den Sensor (46), um zu bewirken, dass das System (1) mindestens das HUD-System (10), Stützmittel (7), die Kabine (8) und/oder die Befestigungsanordnung (3) entsprechend Augenbewegungen, Gesten, der Stimme des Beobachters (20) und/oder Informationen von dem mindestens einen Sensor (46) bewegt.

11. System (1) nach Anspruch 10, wobei der eine oder die mehreren Speicher (1002) und der Computerprogrammcode (1004) zusammen mit dem einen oder den mehreren Prozessoren (1000) ausgebildet sind, die freien Enden der Stützarme (4) gegen die Pfeiler oder andere innere Strukturen der Kabine (8) des Fahrzeugs oder der Maschine zu drücken, wodurch Oberflächenkontakte zwischen den Stützarmen (4) und der Kabine (8) ermöglicht werden.

12. Verfahren zum Verwenden des Systems nach Anspruch 1 zur automatisierten oder halbautomatisierten Positions- und Perspektiveneinstellung eines virtuellen Bildes in Bezug auf die reale Szenerie, so dass das virtuelle Bild an einer richtigen Position, Fokusebene und einem richtigen Winkel in Bezug auf ein reales Objekt oder eine zusammengesetzte Ansicht angezeigt wird.

## Revendications

1. Système (1) pour une cabine d'un véhicule ou d'une machine, dans lequel le système
(1) comprend un système d'affichage tête haute (HUD) (10), le système HUD (10) comprenant
un appareil HUD (32) configuré pour projeter une image virtuelle (24) à l'intérieur d'une boîte oculaire (22) devant être vue par un observateur (20),
un agencement de fixation (3) fixé à la cabine (8) ou à des moyens de fixation, l'agencement de fixation (3) étant configuré pour permettre de manière rotative le retrait et la réinstallation du système HUD (10) à l'intérieur de la cabine (8) et la rotation du système HUD (10) selon les mouvements de tête de l'utilisateur ou le basculement de la ligne de visée, de la focalisation de l'œil ou de la focalisation visuelle ;
l'agencement de fixation (3) comprenant de premiers moyens de verrouillage (13), et des moyens de fixation (31) auxquels l'appareil HUD (32) est fixé, et dans lequel les moyens de fixation (31) comprennent de deuxièmes moyens de verrouillage (15) configurés pour verrouiller le système HUD (10) par rapport aux premiers moyens de verrouillage (13) de l'agencement de fixation (3) ;
le système HUD comprenant en outre un combinateur séparé (16) et un miroir à repli (26) ;
dans lequel le système est configuré pour ajuster et faire tourner une position et/ou une orientation de l'image virtuelle (24) et/ou de la boîte oculaire (22), de sorte que l'image virtuelle soit redirigée, réorientée, déformée et/ou manipulée par le biais du combinateur séparé (16) par un ajustement de la position verticale de l'image virtuelle (24) par inclinaison d'au moins un parmi l'appareil HUD (32), le miroir à repli (26), le système HUD (10) et/ou le combinateur séparé (16) ;
un ajustement de la position verticale de la boîte oculaire (22) par ajustement de la distance entre le miroir à repli (26) et le combinateur séparé (16) et en inclinant au moins un parmi l'appareil HUD (32), le miroir à repli (26), et le combinateur séparé (16) ; et
un ajustement de la position horizontale de l'image virtuelle (24) et/ou de la position horizontale de la boîte oculaire (22) par rotation de l'appareil HUD (32) autour
d'un axe A central d'une base centrale du système HUD et ajustement d'au moins un des éléments suivants : la position horizontale de l'axe A central par rapport à la cabine (8), l'orientation du miroir à repli (26) par rapport à l'appareil HUD (32).

2. Système (1) selon la revendication 1, dans lequel le système HUD (10) est déplacé automatiquement en utilisant des capteurs et un système de boucle de rétroaction basé sur le suivi oculaire.

3. Système (1) selon les revendications 1 ou 2, dans lequel la cabine (8) est rotative et de préférence dans lequel le seul degré de liberté fixe est la rotation horizontale de l'image virtuelle (24).

4. Système (1) selon les revendications 2 à 3,
dans lequel le système (1) est configuré pour ajuster une position horizontale de l'image virtuelle (24) et/ou de la boîte oculaire (22) en faisant tourner l'appareil HUD (32) autour d'un axe X central de la cabine (8), et/ou en ajustant l'orientation du combinateur séparé par rapport à l'appareil HUD (32).

5. Système (1) selon les revendications 3 et 4
dans lequel le système HUD (10) comprenant en outre un ou plusieurs moyens de maintien (29) pour fixer le combinateur séparé (16) au système HUD (10) ou à la cabine (8).

6. Système (1) selon l'une quelconque des revendications précédentes, dans lequel
le système (1) comprend au moins un actionneur et au moins un des éléments suivants : un dispositif de suivi oculaire (30), un dispositif de commande gestuelle (44), un dispositif de commande vocale (45) et un capteur (46), les un ou plusieurs dispositifs de suivi oculaire (30), dispositifs de commande gestuelle (44), dispositifs de commande vocale (45) et/ou capteurs (46) comprenant au moins un des éléments suivants : une caméra, une caméra à longueur d'onde normale, une caméra infrarouge, un radar, un sonar, une vidéo, un microphone, un laser, un laser de balayage, un lidar, un capteur d'inclinaison, un capteur de rotation et/ou un capteur de courbure de pare-brise ;
le système comprenant en outre un dispositif de commande (33) comprenant au moins une unité de traitement de données (11) configurée pour calculer une correspondance entre les positions de champ au niveau de l'image virtuelle (24) et les directions réelles depuis la boîte oculaire (22) pour étalonner la position de l'image virtuelle ; et
dans lequel
le système (1) est configuré pour effectuer un étalonnage d'image et/ou une stabilisation d'image.

7. Système (1) selon la revendication 1, dans lequel la position horizontale de l'axe A central est ajustée par des bras de support (4) mobiles et/ou par ajustement des longueurs des tiges (18, 19).

8. Système (1) selon la revendication 7,
dans lequel le système (1) est configuré pour ajuster la position horizontale et/ou verticale de l'image virtuelle (24) et/ou de la boîte oculaire (22) en ajustant la position horizontale et/ou verticale du système HUD (10) par rapport à la cabine (8) en déplaçant les bras de support (4) et/ou en ajustant la longueur des bras de support (4).

9. Système (1) selon la revendication 7 ou 8, dans lequel
chaque bras de support (4) comprenant une première extrémité (5) et une deuxième extrémité (6) ; et
les deuxièmes extrémités (6) des bras de support (4) sont configurées pour être poussées contre des montants ou tirées depuis les montants ou d'autres structures internes de la cabine (8) du véhicule ou de la machine, permettant ainsi des contacts de surface entre les bras de support (4) et la cabine (8).

10. Système (1) selon la revendication 9,
dans lequel le système (1) comprend un ou plusieurs processeurs (1000), et une ou plusieurs mémoires (1002) incluant du code (1004) de programme informatique, dans lequel
les une ou plusieurs mémoires (1002) et le code (1004) de programme informatique avec les un ou plusieurs processeurs (1000) sont configurés pour surveiller des données acheminées par au moins l'un des éléments suivants : un dispositif de suivi oculaire (30), un dispositif de commande gestuelle (44), un dispositif de commande vocale (45) et/ou un capteur (46), et pour commander l'au moins un actionneur (9) en utilisant les données surveillées acheminées par l'au moins un des éléments suivants : un dispositif de suivi oculaire (30), un dispositif de commande gestuelle (44), un dispositif de commande vocale (45) et/ou le capteur (46) pour amener le système (1) à déplacer au moins le système **HUD** (10), les moyens de support (7), la cabine (8) et/ou l'agencement de fixation (3) selon les mouvements oculaires, les gestes, la voix de l'observateur (20), et/ou des informations provenant de l'au moins un capteur (46).

11. Système (1) selon la revendication 10, dans lequel les une ou plusieurs mémoires (1002) et le code (1004) de programme informatique avec le ou les processeurs (1000) sont configurés pour pousser les extrémités libres des bras de support (4) contre les montants ou autres structures internes de la cabine (8) du véhicule ou de la machine, permettant ainsi des contacts de surface entre les bras de support (4) et la cabine (8).

12. Procédé d'utilisation du système selon la revendication 1 pour un ajustement automatisé ou semi-automatisé de la position et de la perspective d'une image virtuelle par rapport à la scène du monde réel de sorte que l'image virtuelle soit affichée à une position, à un plan focal et à un angle corrects par rapport à un objet du monde réel ou à une vue composite.
